# EUROPEAN PATENT APPLICATION

(11) **EP 4 709 014 A1**
(43) Date of publication of application: **11.03.2026**
(21) Application number: 24842064.8
(22) Date of filing: 24.05.2024
(51) Int. Cl.: H04W 72/29

(54) **COMMUNICATION SYSTEM AND METHOD**

(30) Priority: 14.07.2023 CN 202310875394
(71) Applicant: Huawei Technologies Co., Ltd., Shenzhen, Guangdong 518129 (CN)
(72) Inventor: ZHANG, Roujia, Shenzhen, Guangdong 518129 (CN); SUN, Fei, Shenzhen, Guangdong 518129 (CN)
(74) Representative: Goddar, Heinz J.
(86) International application number: PCT/CN2024/095286
(87) International publication number: WO 2025/016064

(57) **Abstract**

A communication system and method are provided. The communication system includes a first central unit CU, a first apparatus, and at least one distributed unit DU, where the first CU may be configured to manage the first apparatus and/or a part or all of the at least one DU; and the first apparatus may be configured to manage resource collaboration of the at least one DU. In this way, resource collaboration of a DU can be implemented without signaling transmission for resource collaboration negotiation between CUs, so that resource collaboration efficiency of the DU can be improved, a processing delay of the DU can be reduced, and resource utilization of the DU can be improved.

## Description

### CROSS-REFERENCE TO RELATED APPLICATIONS

This application claims priority to Chinese Patent Application No. 202310875394.4, filed with the China National Intellectual Property Administration on July 14, 2023 and entitled "COMMUNICATION SYSTEM AND METHOD", which is incorporated herein by reference in its entirety.

### TECHNICAL FIELD

Embodiments of this application relate to the wireless communication field, and in particular, to a communication system and method.

### BACKGROUND

In a mobile communication system, an access network may include a central unit (central unit, CU) and a distributed unit (distributed unit, DU). One CU may be connected to one DU, or a plurality of DUs may share the CU. The CU and the DU may be split based on a protocol stack. In a possible manner, a radio resource control (radio resource control, RRC) layer, a service data adaptation protocol (service data adaptation protocol, SDAP) layer, and a packet data convergence protocol (packet data convergence protocol, PDCP) layer are deployed on the CU, and a radio link control (radio link control, RLC) layer, a medium access control (medium access control, MAC) layer, a physical (PHY) layer, and the like that are remaining are deployed on the DU.

Currently, how to improve resource collaboration efficiency of the DU needs further attention.

### SUMMARY

This application provides a communication system and method, to improve resource collaboration efficiency of a DU.

**According to a first aspect,** an embodiment of this application provides a communication system. The communication system includes a first CU, a first apparatus, and at least one DU, where the first CU may be configured to manage the first apparatus and/or a part or all of the at least one DU; and the first apparatus may be configured to manage resource collaboration of the at least one DU.

Based on the system, the first apparatus can flexibly manage the resource collaboration of the at least one DU, and can flexibly schedule a resource of the at least one DU. In this way, resource collaboration of a DU can be implemented without signaling transmission for resource collaboration negotiation between CUs, so that resource collaboration efficiency of the DU can be improved, a processing delay of the DU can be reduced, and resource utilization of the DU can be improved.

In a possible design, a manner in which the first apparatus manages the resource collaboration of the at least one DU may include at least one of the following: The first apparatus is configured to manage load monitoring of the at least one DU; the first apparatus is configured to be responsible for backup management on the at least one DU; the first apparatus is configured to be responsible for path management on information transmission of the at least one DU; and the first apparatus is configured to be responsible for data migration management on the at least one DU. According to the design, the first apparatus may effectively manage the resource collaboration of the at least one DU.

In a possible design, the first apparatus is further for transmission of user plane information and/or control plane information exchanged between the first CU and the at least one DU. According to the design, the at least one DU can communicate with the first CU via the first apparatus, so that the first apparatus and the first CU perform unified management on the at least one DU.

In a possible design, the at least one DU includes a first DU, and the first CU is further configured to exchange user plane information and/or control plane information with the first DU through an interface between the first CU and the first DU. According to the design, the at least one DU can directly communicate with the first CU, so that the first CU manages the at least one DU.

In a possible design, the at least one DU includes the first DU, and the first apparatus is further configured to exchange user plane information and/or control plane information with the first DU through an interface between the first apparatus and the first DU. According to the design, the interface can be disposed between the first apparatus and the first DU, so that the first apparatus communicates with the first DU.

In a possible design, the at least one DU includes the first DU and a second DU, where the first DU is configured to send user plane information and/or control plane information to the second DU through an interface between the first DU and the second DU; or the first DU is configured to send the user plane information and/or the control plane information to the second DU via the first apparatus. According to the design, the interface can be disposed between the first DU and the second DU, so that the first DU communicates with the second DU.

In a possible design, when the first apparatus is configured to exchange the user plane information and the control plane information with the first DU through the interface between the first apparatus and the first DU, and the first DU is configured to exchange user plane information and/or control plane information with the second DU through the interface between the first DU and the second DU or via the first apparatus, the first apparatus is further configured to exchange user plane information and/or control plane information with the first CU through an interface between the first CU and the first apparatus. The design shows a manner of communication between the first apparatus and the first DU and a manner of communication between the first CU and the first apparatus. In this way, any two of the first CU, the first apparatus, and the first DU can directly or indirectly communicate with each other.

**According to a second aspect,** an embodiment of this application provides a communication method. The method may be applied to the first apparatus. The first apparatus may be a hardware apparatus. For example, the first apparatus may be a network element. Alternatively, the first apparatus may be implemented by using software. For example, the first apparatus is a logical node. The method may include: The first apparatus may determine that a resource of the first DU is overloaded, where the first DU is a DU in the at least one DU. The first apparatus may determine the second DU as a DU that assists the first DU in communication or a candidate DU that is capable of assisting the first DU in the communication, where the second DU is a DU other than the first DU in the at least one DU.

According to the method, the first apparatus can determine the second DU as the DU that assists the first DU in the communication or the candidate DU that is capable of assisting the first DU in the communication. In this way, resource collaboration of a DU can be implemented without signaling transmission for resource collaboration negotiation between CUs, so that resource collaboration efficiency of the DU can be improved, a processing delay of the DU can be reduced, and resource utilization of the DU can be improved.

In a possible design, after receiving a part or all that is of a terminal context of the first DU and that is sent by the first DU, the first apparatus may further send the part or all of the terminal context of the first DU to the second DU. According to the design, if the second DU is determined as the DU that assists the first DU in the communication or the candidate DU that is capable of assisting the first DU in the communication, after receiving the part or all that is of the terminal context of the first DU and that is sent by the first DU, the first apparatus may send the part or all of the terminal context of the first DU to the second DU. In this way, the second DU can quickly obtain the part or all of the terminal context of the first DU, so that the resource collaboration efficiency of the DU can be improved.

In a possible design, the first apparatus may further send first notification information to the second DU, to enable the second DU to obtain a part or all of a terminal context of the first DU from the first apparatus or the first DU when the second DU assists the first DU in the communication, where the first notification information is for notifying that the second DU is the DU that assists the first DU in the communication or the candidate DU that is capable of assisting the first DU in the communication. According to the design, the second DU may obtain the part or all of the terminal context of the first DU from the first apparatus or the first DU based on the first notification information from the first apparatus, so that the part or all of the terminal context of the first DU can be obtained on demand, and signaling overheads are reduced while the resource collaboration efficiency of the DU is improved.

Optionally, when the second DU obtains the part or all of the terminal context of the first DU from the first apparatus, the first apparatus may further receive the part or all that is of the terminal context of the first DU and that is sent by the first DU.

In a possible design, the first apparatus may further send second notification information to the first DU, to enable the first DU to send a part or all of a terminal context of the first DU to the second DU, where the second notification information is for notifying the first DU that the second DU is the DU that assists the first DU in the communication or the candidate DU that is capable of assisting the first DU in the communication. According to the design, the first DU may send the part or all of the terminal context of the first DU to the second DU based on the second notification information from the first apparatus, so that the second DU can obtain the part or all of the terminal context of the first DU in time, and the resource collaboration efficiency of the DU is improved.

In some implementations, the first apparatus may send routing information and address information of the second DU to the first DU, where the routing information indicates a route for communication between the first DU and the second DU. In this way, when there is no interface between the first DU and the second DU, the first DU may quickly send the part or all of the terminal context of the first DU to the second DU via the routing information and the address information of the second DU.

In some other implementations, the first apparatus may send information for establishing a tunnel on a first path, where the first path is a path for information transmission between the first DU and the second DU, and the first path includes one or more segments of tunnels. In this way, when there is no interface between the first DU and the second DU, the first DU may quickly send the part or all of the terminal context of the first DU to the second DU through the one or more segments of tunnels on the first path.

In a possible design, when the first apparatus determines the second DU as the DU that assists the first DU in the communication, the first apparatus may send a first data packet to the second DU, where the first data packet is a data packet that the second DU assists the first DU in processing. Then, the first apparatus may receive a second data packet sent by the second DU, where the second data packet is a data packet obtained by the second DU by processing the first data packet based on the part or all of the terminal context of the first DU. According to the design, the second DU can assist the first DU in the communication, to reduce a transmission delay of data corresponding to the first DU, and improve the resource utilization of the DU.

In a possible design, the first apparatus may determine, in the following manner, that the resource of the first DU is overloaded: The first apparatus receives first information sent by the first DU, where the first information is for determining a resource load status of the first DU. Then the first apparatus may determine, based on the first information, that the resource of the first DU is overloaded. According to the design, the first apparatus may accurately determine, based on the first information for determining the resource load status of the first DU, that the resource of the first DU is overloaded.

Optionally, the first information may indicate that the resource load status of the first DU is that the resource is overloaded, so that specific resource load data of the first DU does not need to be indicated, and the signaling overheads are reduced. Alternatively, the first information includes resource load data of the first DU, where the resource load data of the first DU is for determining the resource load status of the first DU. In this way, the first DU does not need to determine the resource load status of the first DU, so that a computing resource of the first DU can be saved.

In some implementations, the first information is sent by the first DU when a first condition is satisfied, and the first condition includes at least one of the following: The first DU receives a first request from the first apparatus, where the first request is for requesting to obtain the first information; or the first request includes one or more conditions for the first DU to send the first information, and the one or more conditions are satisfied; the resource of the first DU is overloaded; and during information transmission, the resource of the first DU is overloaded. In this way, the first DU sends the first information only when the first condition is satisfied, so that the signaling overheads can be reduced.

Optionally, the first apparatus may receive, through an interface between the first apparatus and the first DU, the first information sent by the first DU; or the first apparatus receives, via a third DU, the first information sent by the first DU, where the third DU is a DU other than the first DU in the at least one DU. In this way, the first DU can flexibly send the first information to the first apparatus.

In some implementations, when the first condition includes that the first DU receives the first request from the first apparatus, the first apparatus may further receive a second request from the first CU, where the second request is for requesting the first apparatus to obtain information for determining resource load statuses of N DUs, the N DUs include the first DU, and N is a positive integer. In this way, the first apparatus can send the first request on demand based on the second request, so that the signaling overheads can be reduced.

For example, the second request further indicates at least one of the following: a trigger condition for any one of the N DUs to send information for determining a resource load status of the DU; resource types corresponding to the resource load statuses of the N DUs; and representation forms of the information for determining the resource load statuses of the N DUs.

Optionally, the first request further indicates at least one of the following: a resource type corresponding to the resource load status of the first DU; and a representation form of the first information.

In a possible design, the first apparatus may determine, in the following manner, that the resource of the first DU is overloaded: The first apparatus receives the part or all that is of the terminal context of the first DU and that is sent by the first DU, where the part or all of the terminal context of the first DU is sent by the first DU when the resource of the first DU is overloaded. Then, the first apparatus may determine that the resource of the first DU is overloaded. According to the design, the first DU may implicitly indicate, to the first apparatus, that the resource of the first DU is overloaded, and there is no need to explicitly indicate, by using additional signaling, that the resource of the first DU is overloaded, so that the signaling overheads can be reduced. In addition, according to the design, the first apparatus may obtain the part or all of the terminal context of the first DU in time, so that the resource collaboration efficiency can be improved.

In a possible design, the first apparatus may determine, based on capability information and/or a resource load status of the at least one DU, the second DU as the DU that assists the first DU in the communication or the candidate DU that is capable of assisting the first DU in the communication. According to the design, the first apparatus may determine an appropriate collaborative DU or backup DU for the first DU.

In a possible design, the first apparatus may receive third notification information sent by the first DU, where the third notification information is for notifying the first apparatus that the second DU is the DU that assists the first DU in the communication or the candidate DU that is capable of assisting the first DU in the communication. Then, the first apparatus may determine, based on the third notification information, the second DU as the DU that assists the first DU in the communication or the candidate DU that is capable of assisting the first DU in the communication. According to the design, the first apparatus can quickly determine a collaborative DU or a backup DU of the first DU based on the third notification information.

**According to a third aspect,** an embodiment of this application provides a communication method. The method may be applied to the first DU, may be applied to a module (for example, a circuit or a chip) in the first DU, or may be applied to a logical node, a logical module, or software that can implement all or a part of functions of the first DU. The following uses an example in which the method is applied to the first DU for description. The method may include: The first DU receives second notification information sent by the first apparatus, where the second notification information is for notifying the first DU that the second DU is a DU that assists the first DU in communication or a candidate DU that is capable of assisting the first DU in the communication, the first DU is a DU in the at least one DU, and the second DU is a DU other than the first DU in the at least one DU. Then, the first DU may send a part or all of a terminal context of the first DU to the second DU.

In a possible design, the first DU may send the part or all of the terminal context of the first DU to the second DU through an interface between the first DU and the second DU or via the first apparatus.

In a possible design, the first DU may further receive routing information and address information of the second DU from the first apparatus, where the routing information indicates a route for communication between the first DU and the second DU. Then, the first DU may send the part or all of the terminal context of the first DU to the second DU based on the routing information and the address information of the second DU.

In a possible design, the first DU may further receive, from the first apparatus, information for establishing a tunnel on a first path, where the first path is a path for information transmission between the first DU and the second DU, and the first path includes one or more segments of tunnels. Then, the first DU may send the part or all of the terminal context of the first DU to the second DU through the tunnel on the first path.

In a possible design, the first DU may further send first information to the first apparatus, where the first information is for determining a resource load status of the first DU.

Optionally, the first information indicates that the resource load status of the first DU is that a resource is overloaded, or the first information includes resource load data of the first DU, where the resource load data of the first DU is for determining the resource load status of the first DU.

In some implementations, the first information is sent by the first DU when a first condition is satisfied, and the first condition includes at least one of the following: The first DU receives a first request from the first apparatus, where the first request is for requesting to obtain the first information; or the first request includes one or more conditions for the first DU to send the first information, and the one or more conditions are satisfied; the resource of the first DU is overloaded; and during information transmission, the resource of the first DU is overloaded.

Optionally, the first request further indicates at least one of the following: a resource type corresponding to the resource load status of the first DU; and a representation form of the first information.

In a possible design, the first DU sends the first information to the first apparatus through an interface between the first apparatus and the first DU; or the first DU sends the first information to the first apparatus via a third DU, where the third DU is a DU other than the first DU in the at least one DU.

**According to a fourth aspect,** an embodiment of this application provides a communication method. The method may be applied to the second DU, may be applied to a module (for example, a circuit or a chip) in the second DU, or may be applied to a logical node, a logical module, or software that can implement all or a part of functions of the second DU. The following uses an example in which the method is applied to the second DU for description. The method may include: The second DU receives first notification information sent by the first apparatus, where the first notification information is for notifying that the second DU is a DU that assists the first DU in communication or a candidate DU that is capable of assisting the first DU in the communication, the first DU is a DU in the at least one DU, and the second DU is a DU other than the first DU in the at least one DU. Then, the second DU may obtain a part or all of a terminal context of the first DU from the first apparatus or the first DU.

In a possible design, after receiving a first data packet sent by the first apparatus, the second DU may send a second data packet to the first apparatus, where the first data packet is a data packet that the second DU assists the first DU in processing, and the second data packet is a data packet obtained by the second DU by processing the first data packet based on the part or all of the terminal context.

**According to a fifth aspect,** an embodiment of this application provides a communication method. The method may be applied to the first DU, may be applied to a module (for example, a circuit or a chip) in the first DU, or may be applied to a logical node, a logical module, or software that can implement all or a part of functions of the first DU. The following uses an example in which the method is applied to the first DU for description. The method may include: When a resource of the first DU is overloaded, the first DU determines the second DU as a DU that assists the first DU in communication or a candidate DU that is capable of assisting the first DU in the communication, where the first DU is a DU in the at least one DU, and the second DU is a DU other than the first DU in the at least one DU. Then, the first DU may send a part or all of a terminal context of the first DU to the second DU.

In a possible design, the first DU may send the part or all of the terminal context of the first DU to the second DU through an interface between the first DU and the second DU or via the first apparatus.

In a possible design, the first DU may send third notification information to the first apparatus, where the third notification information is for notifying the first apparatus that the second DU is the DU that assists the first DU in the communication or the candidate DU that is capable of assisting the first DU in the communication.

**According to a sixth aspect,** this application provides a communication apparatus. The communication apparatus may be a first apparatus, may be a module (for example, a circuit or a chip) in the first apparatus, or may be a logical node, a logical module, or software that can implement all or a part of functions of the first apparatus. The communication apparatus has a function of implementing the second aspect. For example, the communication apparatus includes a corresponding module, unit, or means for performing the operations in the second aspect. The module, unit, or means may be implemented by software, may be implemented by hardware, or may be implemented by hardware executing corresponding software.

In a possible design, the communication apparatus includes a processing unit and an interface unit. The interface unit may be configured to receive and send signals, to implement communication between the communication apparatus and another apparatus. The processing unit may be configured to perform some internal operations of the communication apparatus. Functions performed by the processing unit and the interface unit may correspond to the operations in the second aspect.

In a possible design, the communication apparatus includes a processor, and the processor may be configured to be coupled to a memory. The memory may store a computer program or instructions necessary for implementing the functions in the second aspect. The processor may execute the computer program or the instructions stored in the memory. When the computer program or the instructions are executed, the communication apparatus is enabled to implement the method in any possible design of the second aspect.

In a possible design, the communication apparatus includes a processor and a memory. The memory may store a computer program or instructions necessary for implementing the functions in the second aspect. The processor may execute the computer program or the instructions stored in the memory. When the computer program or the instructions are executed, the communication apparatus is enabled to implement the method in any possible design of the second aspect.

In a possible design, the communication apparatus includes a processor and an interface circuit. The processor is configured to: communicate with another apparatus through the interface circuit, and perform the method in any possible design of the second aspect.

**According to a seventh aspect,** this application provides a communication apparatus. The communication apparatus may be a first DU, may be a module (for example, a circuit or a chip) in the first DU, or may be a logical node, a logical module, or software that can implement all or a part of functions of the first DU. The communication apparatus has a function of implementing the third aspect or the fifth aspect. For example, the communication apparatus includes a corresponding module, unit, or means for performing the operations in the third aspect or the fifth aspect. The module, unit, or means may be implemented by software, may be implemented by hardware, or may be implemented by hardware executing corresponding software.

In a possible design, the communication apparatus includes a processing unit and an interface unit. The interface unit may be configured to receive and send signals, to implement communication between the communication apparatus and another apparatus. The processing unit may be configured to perform some internal operations of the communication apparatus. Functions performed by the processing unit and the interface unit may correspond to the operations in the third aspect or the fifth aspect.

In a possible design, the communication apparatus includes a processor, and the processor may be configured to be coupled to a memory. The memory may store a computer program or instructions necessary for implementing the functions in the third aspect or the fifth aspect. The processor may execute the computer program or the instructions stored in the memory. When the computer program or the instructions are executed, the communication apparatus is enabled to implement the method in any possible design of the third aspect or the fifth aspect.

In a possible design, the communication apparatus includes a processor and a memory. The memory may store a computer program or instructions necessary for implementing the functions in the third aspect or the fifth aspect. The processor may execute the computer program or the instructions stored in the memory. When the computer program or the instructions are executed, the communication apparatus is enabled to implement the method in any possible design of the third aspect or the fifth aspect.

In a possible design, the communication apparatus includes a processor and an interface circuit. The processor is configured to: communicate with another apparatus through the interface circuit, and perform the method in any possible design of the third aspect or the fifth aspect.

**According to an eighth aspect,** this application provides a communication apparatus. The communication apparatus may be a second DU, may be a module (for example, a circuit or a chip) in the second DU, or may be a logical node, a logical module, or software that can implement all or a part of functions of the second DU. The communication apparatus has a function of implementing the fourth aspect. For example, the communication apparatus includes a corresponding module, unit, or means for performing the operations in the fourth aspect. The module, unit, or means may be implemented by software, may be implemented by hardware, or may be implemented by hardware executing corresponding software.

In a possible design, the communication apparatus includes a processing unit and an interface unit. The interface unit may be configured to receive and send signals, to implement communication between the communication apparatus and another apparatus. The processing unit may be configured to perform some internal operations of the communication apparatus. Functions performed by the processing unit and the interface unit may correspond to the operations in the fourth aspect.

In a possible design, the communication apparatus includes a processor, and the processor may be configured to be coupled to a memory. The memory may store a computer program or instructions necessary for implementing the functions in the fourth aspect. The processor may execute the computer program or the instructions stored in the memory. When the computer program or the instructions are executed, the communication apparatus is enabled to implement the method in any possible design of the fourth aspect.

In a possible design, the communication apparatus includes a processor and a memory. The memory may store a computer program or instructions necessary for implementing the functions in the fourth aspect. The processor may execute the computer program or the instructions stored in the memory. When the computer program or the instructions are executed, the communication apparatus is enabled to implement the method in any possible design of the fourth aspect.

In a possible design, the communication apparatus includes a processor and an interface circuit. The processor is configured to: communicate with another apparatus through the interface circuit, and perform the method in any possible design of the fourth aspect.

**According to a ninth aspect,** this application provides a communication system. The communication system may include the communication apparatus according to the sixth aspect. Optionally, the communication system further includes at least one of the following: the communication apparatus according to the seventh aspect, the communication apparatus according to the eighth aspect, or a first CU.

**According to a tenth aspect,** this application provides a computer-readable storage medium. The computer storage medium stores computer-readable instructions. When a computer reads and executes the computer-readable instructions, the computer is enabled to perform the method in any possible design of any one of the second aspect to the fifth aspect.

**According to an eleventh aspect,** this application provides a computer program product. When a computer reads and executes the computer program product, the computer is enabled to perform the method in any possible design of any one of the second aspect to the fifth aspect.

**According to a twelfth aspect,** this application provides a chip. The chip is configured to read a computer program stored in a memory, to perform the method in any possible design of any one of the second aspect to the fifth aspect.

For technical effects that can be achieved in any one of the third aspect to the twelfth aspect, refer to the descriptions of the technical effects that can be achieved in any possible design of either of the first aspect and the second aspect. Repeated parts are not described.

### BRIEF DESCRIPTION OF DRAWINGS

FIG. 1A is a diagram of a CU-DU separation architecture according to an embodiment of this application;
FIG. 1B is a diagram of a fronthaul link and a backhaul link according to an embodiment of this application;
FIG. 2 is a diagram of a communication system according to an embodiment of this application;
FIG. 3A to FIG. 3D are diagrams of several examples of the communication system shown in FIG. 2;
FIG. 4 is a flowchart of a communication method according to an embodiment of this application;
FIG. 5 is a flowchart of another communication method according to an embodiment of this application;
FIG. 6 is a flowchart of still another communication method according to an embodiment of this application;
FIG. 7 is a flowchart of yet another communication method according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

This application provides a communication system and method. The system and the method are based on a same technical concept. Therefore, for implementation of the system and the method, reference may be made to each other. A repeated part is not described again.

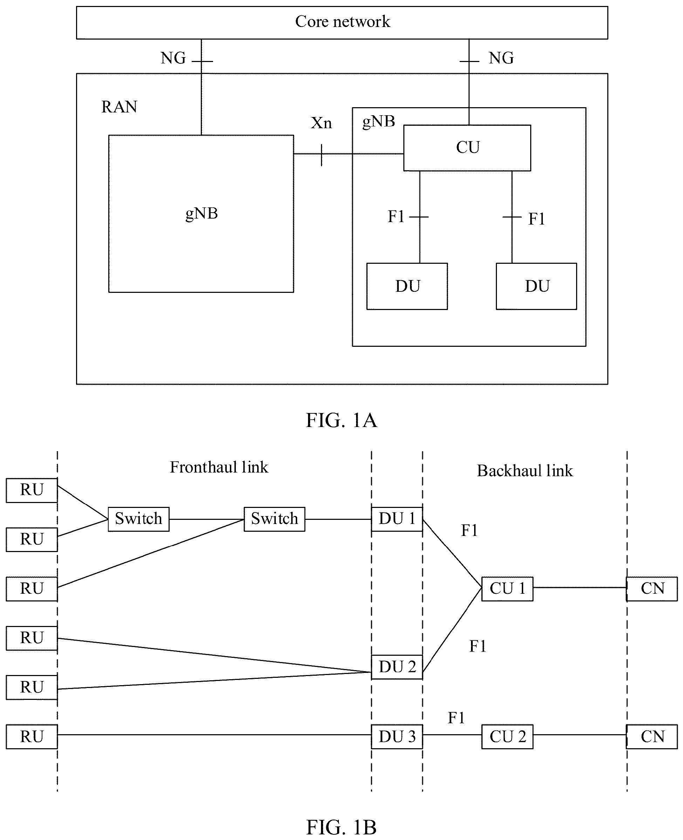

As shown in FIG. 1A, a current communication network architecture includes two parts: a core network and a radio access network (radio access network, RAN). The RAN includes one or more access network (access network, AN) devices. The following explains and describes related devices in the system architecture in FIG. 1A, to facilitate understanding of a person skilled in the art.
(1) The AN device constitutes a part of a communication system, and is configured to help a terminal implement radio access. As a node in the radio access network, the AN device may also be referred to as a RAN node (or device), an access point (access point, AP), or the like.

The RAN may be a cellular system related to the 3rd generation partnership project (3rd generation partnership project, 3GPP), for example, a 5^{th} generation (5^{th} generation, 5G) mobile communication system, or a future-oriented evolved system (for example, a 6^{th} generation (6^{th} generation, 6G) mobile communication system). The RAN may alternatively be an open radio access network (open RAN, O-RAN or ORAN), a cloud radio access network (cloud radio access network, CRAN), or the like. The RAN may alternatively be a communication system that integrates the foregoing two or more systems.

In a possible scenario, the access network device may be a base station (base station), an evolved NodeB (evolved NodeB, eNodeB), the access point (access point, AP), a transmission reception point (transmission reception point, TRP), a next generation NodeB (next generation NodeB, gNB), a next generation base station in the 6G mobile communication system, a base station in a future mobile communication system, or the like. The access network device may be a macro base station, a micro base station, an indoor base station, a relay node, a donor node, or a radio controller in a CRAN scenario. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the access network device in this application may alternatively be implemented through a software function running on hardware, or may be implemented through a virtualization function instantiated on a platform (for example, a cloud platform). The access network device in this application may alternatively be a logical node, a logical module, or software that can implement all or the part of the functions of the access network device.

In another possible scenario, a plurality of access network devices cooperate to assist the terminal in implementing the radio access, and different access network devices respectively implement a part of functions of a base station. For example, the access network device may be a CU or a DU. The CU and the DU may be obtained by splitting functions of a gNB. For example, a part of the functions of the gNB are deployed on the CU, and a remaining function of the gNB is deployed on the DU. In this way, costs can be reduced, and network extension is easy. As shown in FIG. 1A, the CU and the DU may be connected to each other through an F1 interface. The CU may represent the gNB to which the CU belongs, to be connected to the core network through an NG interface. The CU represents the gNB to which the CU belongs, to be connected to another gNB through an Xn interface. The CU may further represent the gNB to which the CU belongs, to be connected to another eNB through an X2 interface to perform a dual connectivity operation. Optionally, the CU and the DU may be separately disposed, or may be included in a same network element, for example, a baseband unit (baseband unit, BBU).

Optionally, the access network device may alternatively be a CU-control plane (control plane, CP), a CU-user plane (user plane, UP), a radio unit (radio unit, RU), or the like. The RU may include a unit configured to implement a part of functions of a physical layer (PHY) and a hardware unit like an antenna, and may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP and the CU-UP), the DU, and the RU in this application may be implemented by using a software module, a hardware module, or a combination of the software module and the hardware module. Optionally, the CU in this application may alternatively be a cloud-based CU.

### (2) Fronthaul link and backhaul link

A link between the RU and the DU is the fronthaul link. On the fronthaul link, the RU and the DU may communicate with each other through a fronthaul interface. For example, switching between a digital signal and a radio signal on the fronthaul link may satisfy a fronthaul interface protocol, for example, a common public radio interface (common public radio Interface, CPRI) protocol or an enhanced common public radio interface (enhanced Common Public Radio Interface, eCPRI) protocol. As shown in FIG. 1B, on the fronthaul link, one DU may correspond to one or more RUs. The DU may be connected to the one or more corresponding RUs through a switch (switch). The switch is configured to be responsible for a function of interconnection between a receiving end and a transmitting end on the fronthaul link, and implement switching between the digital signal and a radio electric signal. Optionally, the switch may be further for a function of switching between the CPRI protocol and the eCPRI protocol.

A link between the DU and the core network (core network, CN) is the backhaul link. For example, the backhaul link may include a link between the DU and the CU and a link between the CU and the CN.

In the following descriptions of this application, "sending information to ... (the terminal)" may be understood as that a destination end of the information is the terminal, and may include directly or indirectly sending the information to the terminal. "Receiving information from ... (the terminal)" may be understood as that a source end of the information is the terminal, and may include directly or indirectly receiving the information from the terminal. Information may undergo necessary processing, for example, a format change, between the source end and the destination end for sending the information. However, the destination end may understand valid information from the source end. A similar expression in this application may be understood similarly. Details are not described herein again.

In the following descriptions of this application, meanings of management, control, scheduling, and collaboration are the same, and may be replaced with each other. Managing an apparatus may include but is not limited to managing at least one of the following: a working manner, a working status, resource collaboration, or the like of the apparatus.

In the following descriptions of this application, a layer 1 (layer 1, L1) may be the PHY layer, and a layer 2 (layer 2, L2) may include at least one of the following: a MAC layer, an RLC layer, a PDCP layer, or an SDAP layer.

In the following descriptions of this application, a terminal context may also be referred to as a user equipment context or the like.

Currently, to improve communication performance, the CU may manage resource collaboration of the DU. For example, as shown in FIG. 1B, a CU 1 manages a DU 1 and a DU 2, and a CU 2 manages a DU 3. The CU 2 may negotiate with the CU 1, to assist the DU 3 in communication by using the DU 1 and/or the DU 2 managed by the CU 1. However, in the method, signaling needs to be exchanged between the CU and the DU and between CUs. A large amount of signaling is exchanged. Consequently, exchange time is long, which reduces resource collaboration efficiency of the DU.

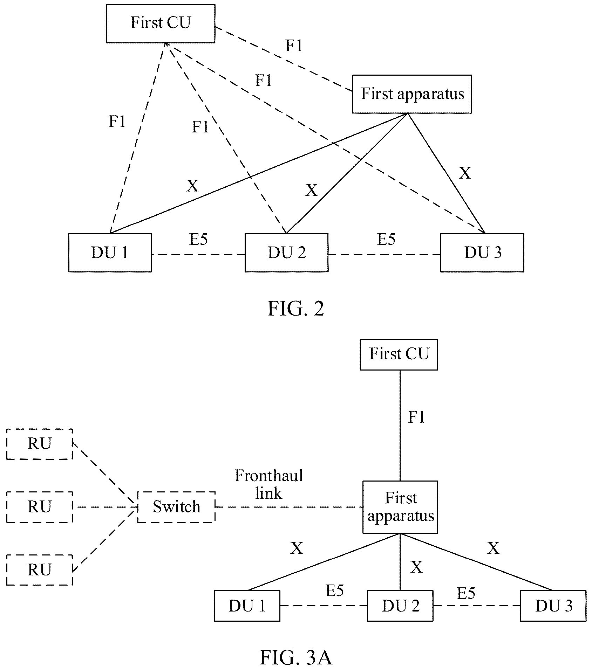

In view of this, this application provides a communication system. As shown in FIG. 2, the communication system may include a first CU, a first apparatus, and at least one DU (for example, a DU 1 to a DU 3 in FIG. 2).

The first CU may be configured to manage the first apparatus and/or a part or all of the at least one DU. In some possible manners, the first CU may be configured to manage the at least one DU and the first apparatus. For example, the first CU may directly manage the at least one DU and the first apparatus. For another example, the first CU may manage the first apparatus, and manage the at least one DU by using the first apparatus. In some other possible manners, the first CU may be configured to manage a first part of DUs in the at least one DU and the first apparatus. Optionally, a DU other than the first part of DUs in the at least one DU may be managed by a CU (for example, a second CU) other than the first CU. For example, the first CU may directly manage the first part of DUs and the first apparatus. In still some other possible manners, the first CU may be configured to manage the part or all of the at least one DU.

It should be understood that, when the first CU is configured to manage the first apparatus, the first CU may manage one or more first apparatuses, and the first apparatus may alternatively be connected to one or more CUs.

The first apparatus and the at least one DU may be considered as a network element combination. The first apparatus may be configured to manage resource collaboration of the at least one DU. The first apparatus may be a hardware apparatus. For example, the first apparatus may be a network element. Alternatively, the first apparatus may be implemented by using software. For example, the first apparatus is a logical node. For example, the first apparatus may be a radio control function (RAN control function, RCF), or the first apparatus may include the RCF and a switch (switch). The first apparatus may be an independent network element, or may be integrated into another apparatus (for example, an access network device like the first CU or the at least one DU).

The following describes manners of communication between the components in the communication system.
**1.** The at least one DU includes a first DU and a second DU. The following uses **communication between the first DU and the second DU** as an example to describe a manner of communication between any two of the at least one DU. The first DU may communicate with the second DU in a plurality of manners, for example, a manner a1 or a manner a2.
   **Manner a1:** The first DU is configured to send user plane information and/or control plane information to the second DU through an interface between the first DU and the second DU. The interface between the first DU and the second DU may be named in a plurality of manners. The following uses an example in which the interface is an E5 interface for description. In some examples, for a function of the E5 interface, refer to a function of an Xn interface. A difference lies in that the E5 interface is configured to exchange user plane information and/or control plane information at an L1 and/or an L2. In some other examples, the E5 interface may be implemented by using a static or preconfigured internet protocol (internet protocol, IP)/general packet radio service (general packet radio service, GPRS) tunneling protocol for the user plane (GPRS tunneling protocol for the user plane, GTP-U) tunnel, so that transmission of user plane information can be performed.
   **Manner a2:** The first DU is configured to send user plane information and/or control plane information to the second DU via the first apparatus. For example, there is an interface between the first DU and the first apparatus, and there is also an interface between the second DU and the first apparatus. An interface between any DU and the first apparatus may be named in a plurality of manners. The following uses an example in which the interface is an X interface for description. Optionally, the X interface further includes an interface (for example, the interface may be referred to as an X-U interface) for transmission of user plane information and an interface (for example, the interface may be referred to as an X-C interface) for transmission of control plane information. The first DU may send the user plane information and/or the control plane information to the first apparatus through an X interface. Then, the first apparatus may forward the user plane information and/or the control plane information from the first DU to the second DU through an X interface.
**2. Communication between the at least one DU and the first apparatus.** The at least one DU includes the first DU. The following uses a manner of communication between the first DU and the first apparatus as an example to describe a manner of the communication between the at least one DU and the first apparatus. The first DU may communicate with the first apparatus in a plurality of manners, for example, a manner b1 or a manner b2.

**Manner b1:** The first apparatus may be configured to exchange user plane information and/or control plane information with the first DU through the interface between the first apparatus and the first DU. In other words, the first DU may directly communicate with the first apparatus. For specific content of the interface between the first apparatus and the first DU, refer to the manner a2. A repeated part is not described again.

In some examples, transmission of the control plane information exchanged between the first DU and the first apparatus may be performed through an X-C interface, to implement resource collaboration and/or data collaboration of the first DU. The control plane information may be for uplink transmission and/or downlink transmission. For example, the control plane information may include at least one of the following: configuration information of the first DU (for example, cell information of the first DU or RRC/broadcast information generated by the first DU), information for the uplink transmission on an F1-C interface such as resource status information of the first DU, information for the downlink transmission on the F1-C interface, or information for collaborative control of the first DU. The information for the collaborative control of the first DU includes, for example, at least one of the following: information for resource load monitoring, information for DU backup management, information for bearer mapping management, and information for route configuration (for example, a single-hop/multi-hop scenario).

In some other examples, transmission of the user plane information exchanged between the first DU and the first apparatus may be performed through an X-U interface. The X-U interface may be for transmission of information on an F1-U interface.

**Manner b2:** The first apparatus may exchange user plane information and/or control plane information with the first DU via a DU (for example, a third DU) other than the first DU in the at least one DU. For example, there is an interface (for example, an E5 interface) between the first DU and the third DU, and there is an interface (for example, an X interface) between the first apparatus and the third DU. During uplink transmission, the first DU may send user plane information and/or control plane information to the third DU through the E5 interface. Then, the third DU may forward the user plane information and/or the control plane information from the first DU to the first apparatus through the X interface. During downlink transmission, the first apparatus may send user plane information and/or control plane information to the third DU through the X interface. Then, the third DU may forward the user plane information and/or the control plane information from the first apparatus to the first DU through the E5 interface.

In the manner b2, for specific content of the control plane information, refer to the manner b1. Details are not described herein again.

**3. Communication between the at least one DU and the first CU.** The at least one DU may communicate with the first CU in a plurality of manners, for example, a manner c1 or a manner c2.

**Manner c1:** The at least one DU may communicate with the first CU via the first apparatus. In other words, the first apparatus may be for transmission of user plane information and/or control plane information exchanged between the first CU and the at least one DU. The following uses the first DU as an example to describe the manner c1.

For example, there is an interface between the first DU and the first apparatus. For specific content of the interface, refer to the manner a2. Details are not described herein again. The following uses an example in which the interface is the X interface for description. There is an interface between the first apparatus and the first CU. The interface may be an F1 interface, or may be a new interface. The following uses an example in which the interface is the F1 interface for description. During uplink transmission, the first DU may send user plane information and/or control plane information to the first apparatus through the X interface. Then, the first apparatus may forward the user plane information and/or the control plane information from the first DU to the first CU through the F1 interface. During downlink transmission, the first CU may send user plane information and/or control plane information to the first apparatus through the F1 interface. Then, the first apparatus may forward the user plane information and/or the control plane information from the first CU to the first DU through the X interface.

**Manner c2:** The at least one DU includes the first DU. The first CU may be configured to exchange user plane information and/or control plane information with the first DU through an interface between the first CU and the first DU. In other words, the first DU may directly communicate with the first CU. The interface between the first CU and the first DU may be an F1 interface.

It should be understood that all DUs in the at least one DU may communicate with the first CU in the manner c1, or may communicate with the first CU in the manner c2. Alternatively, a part of the at least one DU communicate with the first CU in the manner c1, and the other part of the at least one DU communicate with the first CU in the manner c2.

In this application, there may be or may not be an interface between the first apparatus and the first CU. For example, when the first apparatus is configured to exchange the user plane information and the control plane information with the first DU through the interface between the first apparatus and the first DU, and the first DU is configured to exchange user plane information and/or control plane information with the second DU through the interface between the first DU and the second DU or via the first apparatus, there is an interface between the first apparatus and the first CU, and the first apparatus may be configured to exchange user plane information and/or control plane information with the first CU through the interface between the first CU and the first apparatus. For another example, there is no interface between the first apparatus and the first CU, the first CU is configured to manage the part or all of the at least one DU, and the first apparatus is configured to manage the resource collaboration of the at least one DU.

As described above, the first apparatus may manage the resource collaboration of the at least one DU. The resource collaboration of the at least one DU may include at least one of the following: collaboration of a fronthaul link resource (also referred to as a fronthaul resource) of the at least one DU, collaboration of a local computing resource of the at least one DU, or collaboration of a backhaul link resource of the at least one DU. When the first apparatus manages the collaboration of the fronthaul link resource of the at least one DU, if the second DU in the at least one DU assists the first DU in communication, the first apparatus may perform, via an RU corresponding to the second DU, transmission of a data packet whose transmission should be performed by the first DU originally, or may perform, via an RU corresponding to the third DU, transmission of a data packet that should be transmitted by the first DU originally and that is processed by the second DU. The third DU is a DU other than the first DU and the second DU in the at least one DU. The local computing resource of the at least one DU may include a processing resource of a protocol stack included in the at least one DU, for example, a processing resource of one or more of a PHY layer, a MAC layer, a PDCP layer, and an SDAP layer.

The first apparatus is configured to manage the resource collaboration of the at least one DU in a plurality of manners, for example, one or more of a manner d1, a manner d2, a manner d3, and a manner d4. The following uses a load monitoring scenario as an example to describe the manners in which the first apparatus is configured to manage the resource collaboration of the at least one DU.

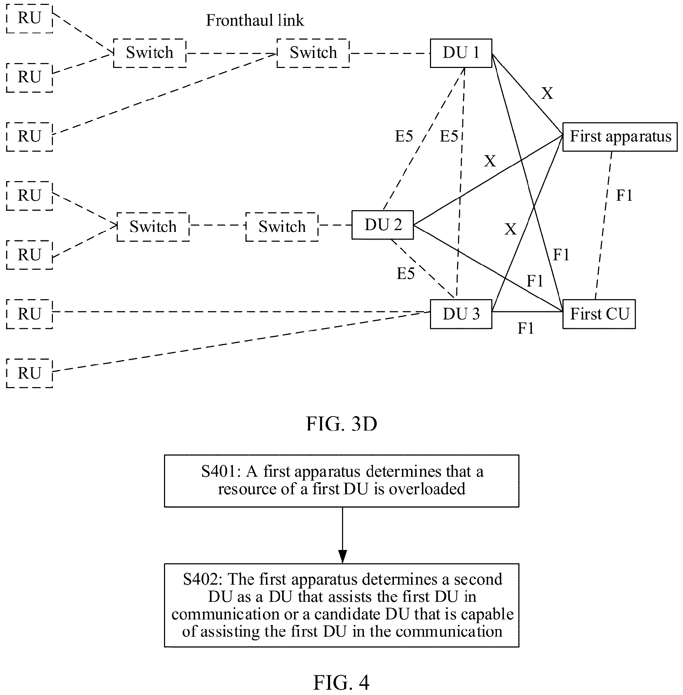

**Manner d1:** The first apparatus is configured to manage load monitoring of the at least one DU. For example, the at least one DU includes the first DU. The first apparatus may receive, from the first DU, first information for determining a resource load status of the first DU, and determine the resource load status of the first DU based on the first information. For specific content that the first apparatus manages the load monitoring of the at least one DU, refer to a method shown in FIG. 4. Details are not described herein.

**Manner d2:** The first apparatus is configured to be responsible for backup management on the at least one DU. For example, the at least one DU includes the first DU and the second DU. The first apparatus may determine the second DU as a candidate DU that is capable of assisting the first DU in the communication, so that the second DU obtains a part or all of a terminal context of the first DU, to back up the terminal context of the first DU. For specific content that the first apparatus is responsible for the backup management on the at least one DU, refer to a method shown in FIG. 4. Details are not described herein.

**Manner d3:** The first apparatus is configured to be responsible for path management on information transmission of the at least one DU. For example, the first apparatus may be configured to be responsible for path management on information transmission between the at least one DU and an apparatus (for example, the first apparatus) other than the at least one DU. For another example, the at least one DU includes the first DU and the second DU, and the first apparatus is configured to be responsible for path management on information transmission between the first DU and the second DU.

In the manner d3, path management may be route management or tunnel management. For specific content, refer to a method shown in FIG. 4. Details are not described herein.

**Manner d4:** The first apparatus is configured to be responsible for data migration management on the at least one DU. For example, the at least one DU includes the first DU and the second DU. A resource of the first DU is overloaded, and the second DU is a DU that assists the first DU in the communication. The first apparatus may send a first data packet that originally needs to be processed by the first DU to the second DU, and the second DU processes the first data packet. Optionally, the data migration management further includes the bearer mapping management. The first apparatus may determine, based on a service attribute of the first data packet (for example, quality of service (quality of service, QoS) information and/or a slice identifier of a service to which the first data packet belongs), to use which radio bearer of the second DU to perform transmission of the first data packet. For specific content that the first apparatus is configured to be responsible for the data migration management on the at least one DU, refer to a method shown in FIG. 4. Details are not described herein.

With reference to FIG. 3A to FIG. 3D, the following describes, by using examples, several possible architectures of the communication system shown in FIG. 2.

FIG. 3A shows a first possible architecture of the communication system shown in FIG. 2. As shown in FIG. 3A, the communication system includes the first CU, the first apparatus, and the at least one DU (for example, the DU 1 to the DU 3). The first apparatus may include the RCF and the switch. Optionally, the communication system further includes a switch and at least one RU. The following describes the components in the communication system.

The first apparatus and the at least one DU may be considered as the network element combination. For the first CU and a fronthaul link, the network element combination may be considered as a single DU. The first apparatus may communicate with the first CU through the interface between the first apparatus and the first CU. For specific content of the interface between the first apparatus and the first CU, refer to the manner c1. Details are not described herein again. The interface between the first apparatus and the first CU may be for transmission of information on the F1 interface. When the first apparatus exchanges information related to the at least one DU with the first CU, transmission of the information related to the at least one DU may be performed by using the information related to the at least one DU as a set. In other words, the first apparatus may exchange the information related to the at least one DU with the first CU in a DU set manner. The first apparatus may be interconnected with a fronthaul interface of the at least one DU via the switch, and perform unified scheduling on a fronthaul resource of the at least one DU, so that the resource collaboration of the at least one DU can be managed.

The first apparatus may be connected to the at least one DU through an X interface, and the X interface may include an X-C interface and an X-U interface. Each of the at least one DU may exchange user plane information and control plane information with the first apparatus through an X interface. For a specific exchange manner, refer to the manner b1. Details are not described herein again. In this way, the RCF in the first apparatus may manage the resource collaboration of the at least one DU. For a management manner, refer to the descriptions of FIG. 2. Details are not described herein again. The resource collaboration of the at least one DU includes the collaboration of the fronthaul link resource and/or the backhaul link resource of the at least one DU.

Optionally, the control plane information exchanged between the first apparatus and the DU may include at least one of the following: control plane information for the uplink transmission or control plane information for the downlink transmission. The control plane information for the uplink transmission may include at least one of the following: the configuration information of the first DU or the information for the uplink transmission on the F1-C interface such as the resource status information of the first DU. The control plane information for the downlink transmission may include at least one of the following: the information for the downlink transmission on the F1-C interface or the information for the collaborative control of the first DU. For specific content of each piece of control plane information, refer to the manner b1. Details are not described herein again.

There may be or may not be an interface between two of the at least one DU. For example, as shown in FIG. 3A, there is an E5 interface between the DU 1 and the DU 2, and there is an E5 interface between the DU 2 and the DU 3. If there is an E5 interface between two DUs, the two DUs may communicate with each other in the foregoing manner a1. For example, the DU 1 may communicate with the DU 2 through the E5 interface. If there is no E5 interface between two DUs, the two DUs may communicate with each other in the foregoing manner a2. For example, the DU 1 may communicate with the DU 2 via the RCF in the first apparatus.

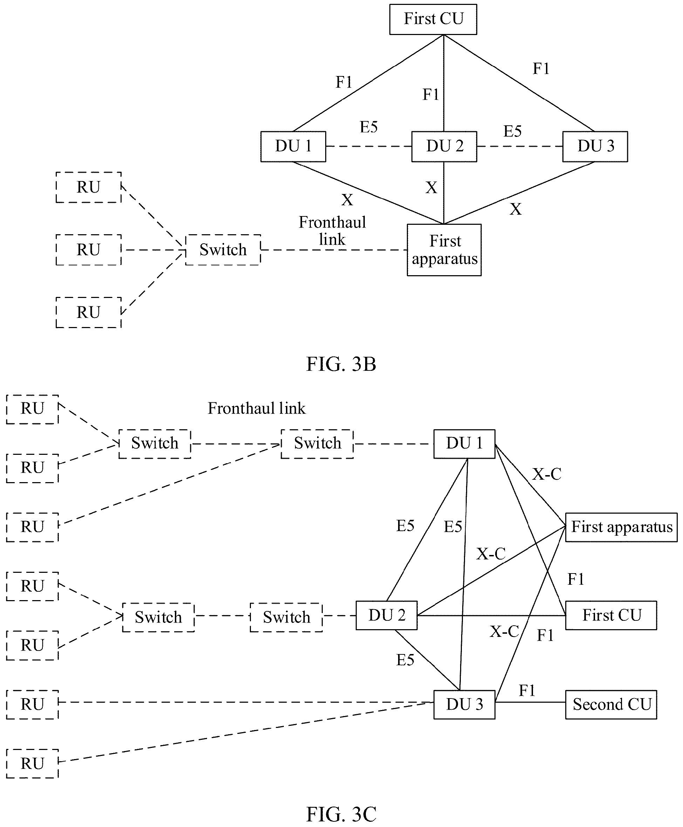

FIG. 3B shows a second possible architecture of the communication system shown in FIG. 2. As shown in FIG. 3B, the communication system includes the first CU, the first apparatus, and the at least one DU (for example, the DU 1 to the DU 3). The first apparatus may include the RCF and the switch. Optionally, the communication system further includes a switch and at least one RU. The following describes the components in the communication system.

The first apparatus and the at least one DU may be considered as the network element combination. For a fronthaul link, the network element combination may be considered as a single DU. The first apparatus may be interconnected with a fronthaul interface of the at least one DU via the switch, and perform unified scheduling on a fronthaul resource of the at least one DU, so that the collaboration of the fronthaul link resource of the at least one DU can be managed. In correspondence to the first CU, each DU in the network element combination may be connected to the first CU through an F1 interface. The first CU may manage resource collaboration between different DUs in the at least one DU. For example, the first CU may manage the collaboration of the backhaul link resource of the at least one DU and/or the collaboration of the local computing resource of the at least one DU.

The first apparatus may be connected to the at least one DU through an X interface, and the X interface may include an X-C interface and an X-U interface. Each of the at least one DU may exchange user plane information and control plane information with the first apparatus through an X interface. For a specific exchange manner, refer to the manner b1. A repeated part is not described again. Optionally, in the structure shown in FIG. 3B, control plane information sent by each of the at least one DU to the first apparatus may include configuration information of the DU (for example, cell information of the DU or broadcast information of the DU) and information for uplink transmission on an F1-C interface such as resource status information of the DU. In this way, the RCF in the first apparatus may manage the collaboration of the fronthaul link resource of the at least one DU based on a capability and a resource state load of each DU, that is, manage collaboration of the PHY layer of the at least one DU. For a management manner, refer to the descriptions of FIG. 2. Details are not described herein again.

A manner of communication between two of the at least one DU is the same as that in the architecture shown in FIG. 3A. For specific content, refer to the descriptions of FIG. 3A. Details are not described herein again.

FIG. 3C shows a third possible architecture of the communication system shown in FIG. 2. As shown in FIG. 3C, the communication system includes the first CU, the first apparatus, and the at least one DU (for example, the DU 1 to the DU 3). The first apparatus may include an RCF. Optionally, the communication system further includes a switch and at least one RU. The following describes the components in the communication system.

The first apparatus may be connected to the at least one DU through an X interface, and the X interface may include an X-C interface. Each of the at least one DU may exchange control plane information with the first apparatus through an X-C interface. For a specific exchange manner, refer to the manner b1. Details are not described herein again. In this way, the RCF in the first apparatus may manage the resource collaboration of the at least one DU. For a management manner, refer to the descriptions of FIG. 2. Details are not described herein again. The resource collaboration of the at least one DU includes the collaboration of the fronthaul link resource and/or the backhaul link resource of the at least one DU.

There is an interface between every two DUs in the at least one DU. For a manner of communication between the every two DUs, refer to the foregoing manner a1. Details are not described herein again.

In some examples, each of the at least one DU may be connected to the first CU through an F1 interface. In some other examples, the first part of DUs in the at least one DU may be connected to the first CU through an F1 interface, and the DU other than the first part of DUs in the at least one DU is connected to the second CU through an F1 interface. For example, the DU 1 and the DU 2 in the at least one DU are connected to the first CU through F1 interfaces, and the DU 3 in the at least one DU is connected to the second CU through an F1 interface.

For a manner of connection between the at least one DU and the RU, refer to the foregoing descriptions of the fronthaul link. Details are not described herein again.

FIG. 3D shows a fourth possible architecture of the communication system shown in FIG. 2. As shown in FIG. 3D, the communication system includes the first CU, the first apparatus, and the at least one DU (for example, the DU 1 to the DU 3). The first apparatus may include an RCF. Optionally, the communication system further includes a switch and at least one RU. The following describes the components in the communication system.

The first apparatus may be connected to the at least one DU through an X interface, and the X interface may include an X-C interface and an X-U interface. Each of the at least one DU may exchange user plane information and control plane information with the first apparatus through an X interface. For a specific exchange manner, refer to the manner b1. Details are not described herein again. In this way, the RCF in the first apparatus may manage the resource collaboration of the at least one DU. For a management manner, refer to the descriptions of FIG. 2. Details are not described herein again. The resource collaboration of the at least one DU includes the collaboration of the fronthaul link resource and/or the backhaul link resource of the at least one DU.

For a manner of connection between each of the at least one DU and the CU and a manner of connection between the at least one DU and the RU, refer to the descriptions of FIG. 3C. Details are not described herein again.

Optionally, there may be an interface between every two DUs in the at least one DU. For a manner of communication between the every two DUs, refer to the foregoing manner a1. Details are not described herein again.

In some possible manners, the first apparatus and the at least one DU may be considered as the network element combination. For the first CU, the network element combination may be considered as a single DU. The first apparatus may communicate with the first CU through the interface between the first apparatus and the first CU. For specific content of the interface between the first apparatus and the first CU, refer to the manner c1. Details are not described herein again. The interface between the first apparatus and the first CU may be for transmission of information on the F1 interface. When the first apparatus exchanges information related to the at least one DU with the first CU, transmission of the information related to the at least one DU may be performed by using the information related to the at least one DU as a set. In other words, the first apparatus may exchange the information related to the at least one DU with the first CU in a DU set manner.

Based on the system shown in FIG. 2, the first apparatus can flexibly manage the resource collaboration of the at least one DU, and can flexibly schedule a resource of the at least one DU. In this way, resource collaboration of a DU can be implemented without signaling transmission for resource collaboration negotiation between CUs, so that resource collaboration efficiency of the DU can be improved, a processing delay of the DU can be reduced, and resource utilization of the DU can be improved.

Based on the communication system shown in FIG. 2, an embodiment of this application further provides a communication method. Refer to a flowchart shown in FIG. 4. The following describes a procedure of the method in detail by using a resource load monitoring scenario as an example.

S401: The first apparatus determines that a resource of the first DU is overloaded, where the first DU is a DU in the at least one DU.

The first apparatus may determine, in a plurality of implementations, for example, a manner e1 or a manner e2, that the resource of the first DU is overloaded.

**Manner e1:** The first apparatus determines, based on first information, that the resource of the first DU is overloaded, where the first information is for determining a resource load status of the first DU.

The manner e1 includes step A1 and step A2.

A1: The first DU sends the first information to the first apparatus. Accordingly, the first apparatus receives the first information sent by the first DU.

In some examples, the first information indicates that the resource load status of the first DU is that the resource is overloaded. For example, when a value of the first information is a first value (for example, 1), it indicates that the resource load status of the first DU is that the resource is overloaded.

In some other examples, the first information includes resource load data of the first DU, and the resource load data of the first DU is for determining the resource load status of the first DU. For example, the resource load data of the first DU may include at least one of the following: physical resource block (physical resource block, PRB) utilization data, transport network layer (transport network layer, TNL) capacity data, or hardware (for example, an RU corresponding to the first DU) resource load data of the first DU.

In step A1, the first DU may send the first information to the first apparatus in a plurality of manners. For example, the first DU may send the first information to the first apparatus in the foregoing manner b1 or manner b2. Details are not described herein again.

Optionally, the first information is sent by the first DU when a first condition is satisfied. The first condition may include at least one of the following condition 1 to condition 3:
**Condition 1:** The first DU receives a first request from the first apparatus. The first request may be for requesting to obtain the first information. In this way, after receiving the first request, the first DU may send the first information. Alternatively, the first request may include one or more conditions for the first DU to send the first information. When the one or more conditions are satisfied, the first DU sends the first information.

When the first request is for requesting to obtain the first information, the first request may be sent by the first apparatus when the first apparatus needs to determine the resource load status of the first DU. For example, the first apparatus sends a request to each of the at least one DU in a polling manner, to obtain information for determining a resource load status of each DU. When the first DU is polled, the first apparatus may send the first request to the first DU.

When the first request includes the one or more conditions for the first DU to send the first information, the one or more conditions may also be referred to as a trigger condition for the first DU to send the first information. For example, the one or more conditions may include at least one of the following: a periodicity (referred to as a first periodicity below) in which the first DU sends the first information, the following condition 2, or the following condition 3. Specific content of the condition 2 and the condition 3 is described below. Details are not described herein. When the one or more conditions include the first periodicity, the first DU may periodically send the first information based on the first periodicity.

Optionally, the first request may further indicate at least one of the following:
1. Resource type corresponding to the resource load status of the first DU (referred to as a first resource type for short below): For example, the first resource type may include at least one of the following: PRB utilization, a TNL capacity, or hardware resource load of the first DU.
2. Representation form of the first information (referred to as a first representation form for short below): In some examples, the first representation manner is, for example, a numerical form. In this case, the first information may include the resource load data of the first DU. In some other examples, the first representation manner is, for example, indicating whether the resource load status of the first DU is that the resource is overloaded. In this case, the first information may indicate whether the resource load status of the first DU is that the resource is overloaded. For example, when the value of the first information is the first value (for example, 1), it indicates that the resource load status of the first DU is that the resource is overloaded. When a value of the first information is a second value (for example, 0), it indicates that the resource load status of the first DU is that the resource is not overloaded. In this way, the first DU can determine content of the first information based on the first request.

In some possible manners, the first request may be actively sent by the first apparatus to the first DU. In this case, information in the first request may be determined by the first apparatus, or may be preconfigured.

In some other possible manners, the first apparatus may send the first request after receiving a second request from the first CU, where the second request is for requesting the first apparatus to obtain information for determining resource load statuses of N DUs, N is a positive integer, and the N DUs may include one or more of the at least one DU, for example, include a first DU.

Optionally, the second request may indicate at least one of the following:
1. Trigger condition for any one of the N DUs to send information for determining a resource load status of the DU: The trigger condition includes, for example, at least one of the following: a periodicity (referred to as a second periodicity below) in which any one of the N DUs sends the information for determining the resource load status of the DU; that the first apparatus sends the request to each of the at least one DU in the polling manner, to obtain the information for determining the resource load status of each DU; the following condition 2; or the condition 3. For the specific content of the condition 2 and the condition 3, refer to the following descriptions. Details are not described herein. When the trigger condition includes the second periodicity, the first apparatus may periodically send the first request based on the second periodicity, or may send the second periodicity to the N DUs, so that the N DUs periodically send the information for determining the resource load statuses of the DUs.
2. Resource types corresponding to the resource load statuses of the N DUs (referred to as second resource types for short below): For specific content of the second resource types, refer to the first resource type. Only the first DU is replaced with the N DUs. Details are not described herein again.
3. Representation forms of the information for determining the resource load statuses of the N DUs (referred to as second representation forms for short below): For specific content of the second representation forms, refer to the first representation form. Only the first DU is replaced with the N DUs. Details are not described herein again.

**Condition 2:** The resource of the first DU is overloaded. For example, when the resource load data of the first DU exceeds a resource load threshold, the first DU may send the first information. The resource load threshold may be preset, or may be obtained by the first DU from another apparatus (for example, the first apparatus). Based on the condition 2, the first DU sends the first information only when the resource of the first DU is overloaded, so that signaling overheads can be reduced.

**Condition 3:** During information transmission, the resource of the first DU is overloaded. The information transmission may be uplink transmission, or may be downlink transmission. For specific content that the resource of the first DU is overloaded, refer to the condition 2. Details are not described herein again. In this way, the first DU sends the first information only when the first DU performs information transmission and the resource of the first DU is overloaded, so that signaling overheads can be reduced while information transmission quality is not affected.

It should be understood that the condition 2 and the condition 3 may be preconfigured for the first DU, or may be obtained by the first DU from the another apparatus (the first apparatus). This is not limited in this application.

A2: The first apparatus determines, based on the first information, that the resource of the first DU is overloaded.

When the first information indicates that the resource load status of the first DU is that the resource is overloaded, the first apparatus may quickly determine, after receiving the first information, that the resource of the first DU is overloaded.

When the first information includes the resource load data of the first DU, if the resource load data of the first DU exceeds the resource load threshold, the first apparatus may determine that the resource load status of the first DU is that the resource is overloaded. The resource load threshold may be preset, or may be obtained by the first apparatus from another apparatus (for example, the first CU).

In the manner e1, the first apparatus may accurately determine, based on the first information for determining the resource load status of the first DU, that the resource of the first DU is overloaded.

**Manner e2:** The first apparatus determines, based on a part or all that is of a terminal context of the first DU and that is sent by the first DU, that the resource of the first DU is overloaded.

The manner e2 includes step B1 and step B2.

B1: When the resource of the first DU is overloaded, the first DU sends the part or all of the terminal context of the first DU to the first apparatus. Accordingly, the first apparatus receives the part or all that is of the terminal context of the first DU and that is sent by the first DU.

For a manner in which the first DU determines that the resource of the first DU is overloaded, refer to the foregoing condition 2. Details are not described herein again.

Optionally, when the first DU performs information transmission, and the resource of the first DU is overloaded, the first DU sends the part or all of the terminal context of the first DU to the first apparatus. In other words, when the foregoing condition 3 is satisfied, the first DU sends the part or all of the terminal context of the first DU to the first apparatus. In this way, the first DU sends the part or all of the terminal context of the first DU only when the first DU performs information transmission and the resource of the first DU is overloaded, so that signaling overheads can be reduced while information transmission quality is not affected.

**In** step B1, the first DU may send the part or all of the terminal context of the first DU to the first apparatus in a plurality of manners. For example, the first DU may send the part or all of the terminal context of the first DU to the first apparatus in the foregoing manner b1 or manner b2. It should be understood that, when information transmission is performed in the manner b2, between the first DU and the first apparatus, a DU configured to forward first information and a DU configured to forward the part or all of the terminal context of the first DU may be a same DU, or may be different DUs.

B2: The first apparatus determines that the resource of the first DU is overloaded.

Because the part or all of the terminal context of the first DU is sent by the first DU when the resource of the first DU is overloaded, the first apparatus may determine, after receiving the part or all of the terminal context of the first DU, that the resource of the first DU is overloaded.

In the manner e2, the first DU may implicitly indicate, to the first apparatus, that the resource of the first DU is overloaded, and there is no need to explicitly indicate, by using additional signaling, that the resource of the first DU is overloaded, so that the signaling overheads can be reduced. In addition, in the manner, the first apparatus may obtain the part or all of the terminal context of the first DU in time, so that resource collaboration efficiency can be improved.

S402: The first apparatus determines the second DU as a DU (which may also be referred to as a collaborative DU) that assists the first DU in communication or a candidate DU (which may also be referred to as a backup DU) that is capable of assisting the first DU in the communication. The second DU is a DU other than the first DU in the at least one DU. It should be understood that the first apparatus may determine one or more DUs as a DU (which may also be referred to as a collaborative DU) that assist the first DU in the communication or a candidate DU (which may also be referred to as a backup DU) that is capable of assisting the first DU in the communication. The following uses the second DU in the one or more DUs as an example for description.

S402 may be implemented in a plurality of manners, for example, a manner f1 or a manner f2.

**Manner f1:** The first apparatus determines, based on capability information and/or a resource load status of the at least one DU, the second DU as the DU that assists the first DU in the communication or the candidate DU that is capable of assisting the first DU in the communication.

For example, a DU #1 is any one of the at least one DU. Capability information of the DU #1 may be sent by the DU #1 to the first apparatus. A capability indicated by the capability information of the DU #1 may include at least one of the following: a public land mobile network (public land mobile network, PLMN), network slice information, an NR standard (for example, a time division duplex (time division duplex, TDD)/frequency division duplex (frequency division duplex, FDD) standard), or a frequency spectrum supported by the DU #1. A resource load status of the DU #1 may be determined based on information for determining the resource load status of the DU #1. For specific content of the information for determining the resource load status of the DU #1, refer to the first information. Only the first DU is replaced with the DU #1. Details are not described herein again.

The following uses examples to describe the following: The first apparatus determines, based on the capability information and/or the resource load status of the at least one DU, the second DU as the DU that assists the first DU in the communication or the candidate DU that is capable of assisting the first DU in the communication. The at least one DU includes the first DU, the second DU, and the third DU.

For example, the first DU supports a network slice #1 and a network slice #2. If the first apparatus determines, based on the capability information of the at least one DU, that the second DU supports the network slice #1, the network slice #2, and a network slice #3 and that the third DU supports the network slice #3 and a network slice #4, the first apparatus may determine the second DU as the DU that assists the first DU in the communication or the candidate DU that is capable of assisting the first DU in the communication.

For another example, if the first apparatus determines, based on the resource load status of the at least one DU, that an available resource of the second DU is more than an available resource of the third DU, the first apparatus may determine the second DU as the DU that assists the first DU in the communication or the candidate DU that is capable of assisting the first DU in the communication.

For still another example, the first DU supports a network slice #1 and a network slice #2. The first apparatus determines, based on the capability information of the at least one DU, that the second DU supports the network slice #1, the network slice #2, and a network slice #3 and that the third DU also supports the network slice #1 and the network slice #2. If the first apparatus determines, based on the resource load status of the at least one DU, that an available resource of the second DU is more than an available resource of the third DU, the first apparatus may determine the second DU as the DU that assists the first DU in the communication or the candidate DU that is capable of assisting the first DU in the communication.

In the manner f1, the first apparatus may determine an appropriate collaborative DU or backup DU for the first DU.

**Manner f2:** The first DU determines the second DU as the DU that assists the first DU in the communication or the candidate DU that is capable of assisting the first DU in the communication, and notifies the first apparatus of a determining result.

The manner f2 may include steps C1 to C3.

C1: The first DU determines the second DU as the DU that assists the first DU in the communication or the candidate DU that is capable of assisting the first DU in the communication.

Optionally, the first DU may determine, based on capability information and/or resource load statuses of M DUs, the second DU as the DU that assists the first DU in the communication or the candidate DU that is capable of assisting the first DU in the communication. For a determining manner, refer to the descriptions of "the first apparatus determines, based on the capability information and/or the resource load status of the at least one DU, the second DU as the DU that assists the first DU in the communication or the candidate DU that is capable of assisting the first DU in the communication" in the manner f1. Only the first apparatus is replaced with the first DU, and the at least one DU is replaced with the M DUs. Details are not described herein again. M is a positive integer. The M DUs may be DUs that can communicate with the first DU.

For example, a DU #2 is any one of the M DUs. There is an interface between the first DU and the DU #2, so that capability information of the DU #2 and information for determining a resource load status of the DU #2 that are sent by the DU #2 can be received. For specific content of the capability information of the DU #2, refer to the capability information of the DU #1. Only the DU #1 is replaced with the DU #2. For specific content of the information for determining the resource load status of the DU #2, refer to the first information. Only the first DU is replaced with the DU #2. Details are not described herein again.

C2: The first DU sends third notification information to the first apparatus. Accordingly, the first apparatus receives the third notification information sent by the first DU. The third notification information may be for notifying the first apparatus that the second DU is the DU that assists the first DU in the communication or the candidate DU that is capable of assisting the first DU in the communication.

In step C2, the first DU may send the third notification information to the first apparatus in a plurality of manners. For example, the first DU may send the third notification information to the first apparatus in the foregoing manner b1 or manner b2. Details are not described herein again.

C3: The first apparatus determines, based on the third notification information, the second DU as the DU that assists the first DU in the communication or the candidate DU that is capable of assisting the first DU in the communication.

According to the method shown in FIG. 4, the first apparatus can determine the second DU as the DU that assists the first DU in the communication or the candidate DU that is capable of assisting the first DU in the communication. In this way, resource collaboration of a DU can be implemented without signaling transmission for resource collaboration negotiation between CUs, so that resource collaboration efficiency of the DU can be improved, a processing delay of the DU can be reduced, and resource utilization of the DU can be improved.

In addition, S401 may be an optional step. For example, the first apparatus may periodically or aperiodically determine the second DU as the DU that assists the first DU in the communication or the candidate DU that is capable of assisting the first DU in the communication. In this way, the second DU can quickly assist the first DU in the communication, so that the resource collaboration efficiency of the DU can be improved. When the first apparatus periodically determines the second DU as the DU that assists the first DU in the communication or the candidate DU that is capable of assisting the first DU in the communication, a determining periodicity may be preset, or may be obtained from another device. When the first apparatus aperiodically determines the second DU as the DU that assists the first DU in the communication or the candidate DU that is capable of assisting the first DU in the communication, a determining operation may be triggered based on an event. For example, when a to-be-transmitted data packet needs to satisfy a specified service requirement, the first apparatus determines the second DU as the DU that assists the first DU in the communication or the candidate DU that is capable of assisting the first DU in the communication.

To assist the first DU in the communication, the second DU may obtain the part or all of the terminal context of the first DU, to assist the first DU in the communication by using the part or all of the terminal context of the first DU. The part that is of the terminal context of the first DU and that is obtained by the second DU may include one of the following: all or a part of an L1 terminal context of the first DU, all or a part of an L2 terminal context of the first DU, and a part of the L1 terminal context and a part of the L2 terminal context of the first DU. The second DU obtains the part or all of the terminal context of the first DU in a plurality of implementations, for example, a manner g1, a manner g2, a manner g3, or a manner g4.

**Manner g1:** After receiving the part or all that is of the terminal context of the first DU and that is sent by the first DU, the first apparatus sends the part or all of the terminal context of the first DU to the second DU.

The manner g1 may include steps D1 and D2.

D1: The first DU sends the part or all of the terminal context of the first DU to the first apparatus. Accordingly, the first apparatus receives the part or all that is of the terminal context of the first DU and that is sent by the first DU.

In some possible manners, after determining the second DU as the DU that assists the first DU in the communication or the candidate DU that is capable of assisting the first DU in the communication (that is, S402), the first apparatus may obtain the part or all of the terminal context of the first DU from the first DU. For example, if the first apparatus determines that the second DU assists the first DU in performing processing related to an L1 and/or an L2, after S402, the first apparatus may obtain a context related to the L1 and/or the L2 in the terminal context of the first DU from the first DU, so that the signaling overheads can be reduced. For another example, after S402, the first apparatus may obtain all of the terminal context of the first DU from the first DU.

In some other possible manners, an execution sequence of step D1 and step S402 is not limited. For example, the first DU may periodically send the part or all of the terminal context of the first DU to the first apparatus. For another example, the first apparatus may periodically request to obtain the part or all of the terminal context of the first DU from the first DU, and the first DU sends the part or all of the terminal context of the first DU to the first apparatus based on the request of the first apparatus. For still another example, when the foregoing condition 2 and/or condition 3 are/is satisfied, the first DU may send the part or all of the terminal context of the first DU to the first apparatus.

In addition, for a specific manner in which the first DU sends the part or all of the terminal context of the first DU to the first apparatus, refer to step B1. Details are not described herein again.

D2: The first apparatus sends the part or all of the terminal context of the first DU to the second DU. Accordingly, the second DU receives the part or all that is of the terminal context of the first DU and that is sent by the first apparatus.

The first apparatus may send the part or all of the terminal context of the first DU to the second DU in a plurality of manners. For example, the first apparatus may send the part or all of the terminal context of the first DU to the second DU in the foregoing manner b1 or manner b2.

In some examples, if the first apparatus determines that the second DU assists the first DU in performing processing related to the L1, the first apparatus may send a context related to the L1 in the terminal context of the first DU to the second DU, so that the signaling overheads can be reduced. In some other examples, the first apparatus may send all of the terminal context of the first DU to the second DU.

In addition, step D2 may be performed after S402. In other words, after determining the second DU as the DU that assists the first DU in the communication or the candidate DU that is capable of assisting the first DU in the communication, the first apparatus sends the part or all of the terminal context of the first DU to the second DU.

In the manner g1, if the second DU is determined as the DU that assists the first DU in the communication or the candidate DU that is capable of assisting the first DU in the communication, after receiving the part or all that is of the terminal context of the first DU and that is sent by the first DU, the first apparatus may send the part or all of the terminal context of the first DU to the second DU. In this way, the second DU can quickly obtain the part or all of the terminal context of the first DU, so that the resource collaboration efficiency of the DU can be improved.

**Manner g2:** The first DU sends the part or all of the terminal context of the first DU to the second DU based on second notification information from the first apparatus, where the second notification information is for notifying the first DU that the second DU is the DU that assists the first DU in the communication or the candidate DU that is capable of assisting the first DU in the communication.

The manner g2 may include steps E1 and E2.

E1: The first apparatus sends the second notification information to the first DU. Accordingly, the first DU receives the second notification information from the first apparatus.

The first apparatus may send the second notification information to the first DU in a plurality of manners. For example, the first apparatus may send the second notification information to the first DU in the foregoing manner b1 or manner b2.

Optionally, step E1 is performed after S402.

E2: The first DU sends the part or all of the terminal context of the first DU to the second DU. Accordingly, the second DU receives the part or all that is of the terminal context of the first DU and that is sent by the first DU.

The first DU may send the part or all of the terminal context of the first DU to the second DU in a plurality of manners, for example, a manner h1, a manner h2, or a manner h3.

**Manner h1:** The first DU sends the part or all of the terminal context of the first DU to the second DU through an interface between the first DU and the second DU or via the first apparatus.

For specific content that the first DU sends the part or all of the terminal context of the first DU to the second DU through the interface between the first DU and the second DU, refer to the manner a1. Details are not described herein again.

For specific content that the first DU sends the part or all of the terminal context of the first DU to the second DU via the first apparatus, refer to the manner a2. Details are not described herein again.

In the manner h1, the first DU may quickly send the part or all of the terminal context of the first DU to the second DU.

**Manner h2:** The first DU obtains routing information and address information of the second DU from the first apparatus, and sends the part or all of the terminal context of the first DU to the second DU based on the routing information and the address information of the second DU.

The manner h2 may include steps F1 and F2.

F1: The first apparatus sends the routing information and the address information of the second DU to the first DU. Accordingly, the first DU receives the routing information and the address information of the second DU that are sent by the first apparatus.

The routing information may indicate a route for communication between the first DU and the second DU. For example, the routing information may be a routing table between the first DU and the second DU. For example, the routing table is shown in Table 1, indicating that the first DU may communicate with the second DU via a DU #3. The address information of the second DU may be an IP address of the second DU or an address that uniquely identifies the second DU in a local area network including the at least one DU.

**Table 1**

| Previous-hop node | Next-hop node |
|---|---|
| First DU | DU #3 |
| DU #3 | Second DU |

Optionally, when determining that there is no interface between the first DU and the second DU, the first apparatus may send the routing information and the address information of the second DU to the first DU. In some examples, when determining that the resource of the first DU is overloaded, the first apparatus may send the routing information and the address information of the second DU to the first DU, so that signaling can be saved. In some other examples, the first apparatus may send the routing information and the address information of the second DU to the first DU in advance. In this way, the first DU can quickly send the part or all of the terminal context of the first DU to the second DU, to quickly perform resource collaboration between DUs.

The first apparatus may send the routing information and the address information of the second DU to the first DU in a plurality of manners. For example, the first apparatus may send the routing information and the address information of the second DU to the first DU in the foregoing manner b1 or manner b2.

It should be understood that the routing information and the address information of the second DU may be carried in a same message as the second notification information in step E1, or may be carried in a different message from the second notification information in step E1. This is not limited in this application.

F2: The first DU sends the part or all of the terminal context of the first DU to the second DU based on the routing information and the address information of the second DU.

For example, the routing information is shown in Table 1. The first DU may send the part or all of the terminal context of the first DU to the DU #3. Then, the DU #3 may send the part or all of the terminal context of the first DU to the second DU.

In the manner h2, when there is no interface between the first DU and the second DU, the first DU may quickly send the part or all of the terminal context of the first DU to the second DU via the routing information and the address information of the second DU.

**Manner h3:** The first apparatus sends information for establishing a tunnel on a first path, to establish the tunnel on the first path. The first path includes one or more segments of tunnels. The first DU sends the part or all of the terminal context of the first DU to the second DU through the tunnel on the first path.

Optionally, when determining that there is no interface between the first DU and the second DU, the first apparatus may send the information for establishing the tunnel on the first path, to establish the tunnel on the first path. In some examples, when determining that the resource of the first DU is overloaded, the first apparatus may send the information for establishing the tunnel on the first path, so that signaling can be saved. In some other examples, the first apparatus may send, in advance, the information for establishing the tunnel on the first path. In this way, the first DU can quickly send the part or all of the terminal context of the first DU to the second DU, to quickly perform resource collaboration between DUs.

The tunnel on the first path is established in a plurality of manners, for example, a manner h3-1 or a manner h3-2.

**Manner h3-1:** The first path includes a tunnel between the first DU and the second DU, and the tunnel between the first DU and the second DU is established.

The first apparatus may send address information and TNL information of the second DU to the first DU, where the address information and the TNL information of the second DU may be for establishing the tunnel between the first DU and the second DU. The address information of the second DU may include an IP address of the second DU. The TNL information of the second DU may include a user datagram protocol (user datagram protocol, UDP) port number and a tunnel endpoint identifier (Tunnel Endpoint Identifier, TEID) of the second DU. Then, the first DU may establish the tunnel between the first DU and the second DU based on the address information and the TNL information of the second DU, where the tunnel is a unidirectional tunnel from the first DU to the second DU.

Optionally, the first apparatus may further send address information and TNL information of the first DU to the second DU. The address information of the first DU may include an IP address of the first DU. The TNL information of the first DU may include a UDP port number and a TEID of the first DU. Then, the second DU may establish a unidirectional tunnel from the second DU to the first DU based on the address information and the TNL information of the first DU, so that the tunnel between the first DU and the second DU is a bidirectional tunnel.

After the tunnel between the first DU and the second DU is established, there is an interface between the first DU and the second DU. In this way, the first DU may send the part or all of the terminal context of the first DU to the second DU through the tunnel.

**Manner h3-2:** The first path includes a plurality of segments of tunnels, and the plurality of segments of tunnels are established.

In some possible manners, the first apparatus sends, to the first DU, address information and TNL information of a DU other than the first DU on the first path, and information indicating a sequence of DUs on the first path. The address information and the TNL information of the DU other than the first DU on the first path may be for establishing a tunnel between neighboring DUs on the first path. A DU #4 is any DU other than the first DU on the first path. For specific content of address information and TNL information of the DU #4, refer to the address information and the TNL information of the second DU in the manner h3-1. Only the second DU is replaced with the DU #4. Details are not described herein again.

For example, the first path includes a tunnel from the first DU to a DU #5 and a tunnel from the DU #5 to the second DU. The first apparatus may send, to the first DU, address information and TNL information of the DU #5, address information and TNL information of the second DU, and the information indicating the sequence of the DUs on the first path. The sequence is the first DU, the DU #5, and the second DU. The first DU may establish the tunnel #1 from the first DU to the DU #5 based on the address information and the TNL information of the DU #5, and send, to the DU #5, the address information and the TNL information of the second DU and the information indicating the sequence of the DUs on the first path. Then, the DU #5 may establish the tunnel #2 from the DU #5 to the second DU based on the address information and the TNL information of the second DU. In this way, establishment of a plurality of segments of unidirectional tunnels from the first DU to a second DU side on the first path is completed. The first DU may send the part or all of the terminal context of the first DU to the second DU through the plurality of segments of unidirectional tunnels.

Optionally, the first apparatus may further send, to the second DU, the address information and the TNL information of the DU other than the first DU on the first path, and the information indicating the sequence of the DUs on the first path, to establish a plurality of segments of bidirectional tunnels between the first DU and the second DU.

In some other possible manners, the third DU is any DU other than the second DU on the first path, and a fourth DU is a next-hop DU of the third DU on the first path. The first apparatus may send address information and TNL information of the fourth DU to the third DU, where the address information and the TNL information of the fourth DU are for establishing a tunnel between the third DU and the fourth DU on the first path. For specific content of the address information and the TNL information of the fourth DU, refer to the address information and the TNL information of the second DU in the manner h3-1. Only the second DU is replaced with the fourth DU. Details are not described herein again. Optionally, a plurality of segments of unidirectional tunnels from the second DU to the first DU may be established in a similar manner, to establish a plurality of segments of bidirectional tunnels between the first DU and the second DU.

For example (an example 1), the first path includes a tunnel from the first DU to a DU #5 and a tunnel from the DU #5 to the second DU. The first apparatus may send address information and TNL information of the DU #5 to the first DU, and the first DU establishes the tunnel #1 from the first DU to the DU #5 based on the address information and the TNL information of the DU #5. The first apparatus may further send address information and TNL information of the second DU to the DU #5, and then the DU #5 establishes the tunnel #2 from the DU #5 to the second DU based on the address information and the TNL information of the second DU. In this way, establishment of a plurality of segments of unidirectional tunnels from the first DU to a second DU side on the first path is completed. The first DU may send the part or all of the terminal context of the first DU to the second DU through the plurality of segments of unidirectional tunnels.

Optionally, when the third DU is the DU other than the first DU on the first path, the third DU may further obtain information (referred to as information #1 below) indicating an association relationship between a first tunnel and a second tunnel on the first path, to perform information transmission between the first DU and the second DU through the first tunnel and the second tunnel. The first tunnel is a tunnel between a previous-hop DU of the third DU and the third DU on the first path, and the second tunnel is the tunnel between the third DU and the fourth DU.

In some examples, the first apparatus may further send the information #1 to the third DU. For example, the example 1 is still used as an example, the first tunnel is the tunnel #1, the second tunnel is the tunnel #2, the first apparatus sends, to the DU #5, information indicating an association relationship between the tunnel #1 and the tunnel #2. In this way, after receiving the part or all of the terminal context of the first DU through the tunnel #1, the DU #5 may send the part or all of the terminal context of the first DU to the second DU through the tunnel #2.

In some other examples, the first DU may send the information #1 to the third DU. For example, the example 1 is still used as an example, the first tunnel is the tunnel #1, and the second tunnel is the tunnel #2. When sending the part or all of the terminal context of the first DU through the tunnel #1, the first DU further sends the information #1 through the tunnel #1. Then, the DU #5 may send the part or all of the terminal context of the first DU through the tunnel #2 based on the information #1.

In the manner h3, when there is no interface between the first DU and the second DU, the first DU may quickly send the part or all of the terminal context of the first DU to the second DU through the one or more segments of tunnels on the first path.

**Manner g3:** The second DU obtains the part or all of the terminal context of the first DU based on first notification information from the first apparatus, where the first notification information may be for notifying that the second DU is the DU that assists the first DU in the communication or the candidate DU that is capable of assisting the first DU in the communication.

The manner g3 includes steps G1 and G2.

G1: The first apparatus sends the first notification information to the second DU. Accordingly, the second DU receives the first notification information from the first apparatus.

The first apparatus may send the first notification information to the second DU in a plurality of manners. For example, the first apparatus may send the first notification information to the second DU in the foregoing manner b1 or manner b2.

Optionally, step G1 is performed after S402.

G2: The second DU obtains the part or all of the terminal context of the first DU from the first apparatus or the first DU.

In some examples, after receiving the first notification information, the second DU may obtain the part or all of the terminal context of the first DU from the first apparatus or the first DU. In some other examples, after receiving the first notification information, when the second DU assists the first DU in the communication, the second DU may obtain the part or all of the terminal context of the first DU from the first apparatus or the first DU. In this way, when the second DU does not need the part or all of the terminal context of the first DU, signaling transmission related to the part or all of the terminal context of the first DU can be avoided, to reduce the signaling overheads.

When the second DU obtains the part or all of the terminal context of the first DU from the first apparatus, the second DU may obtain the part or all of the terminal context of the first DU from the first apparatus in the foregoing manner b1 or manner b2. Optionally, the first DU may further send the part or all of the terminal context of the first DU to the first apparatus. Accordingly, the first apparatus receives the part or all that is of the terminal context of the first DU and that is sent by the first DU. For specific content, refer to step D1. Details are not described herein again. Then, the first apparatus may store the part or all of the terminal context of the first DU, and the second DU may obtain the part or all of the terminal context of the first DU from the first apparatus.

The following describes possible examples in which the second DU obtains the part or all of the terminal context of the first DU from the first DU. In some examples, there is an interface between the first DU and the second DU, and the second DU may obtain the part or all of the terminal context of the first DU from the first DU through the interface. In some other examples, there is no interface between the first DU and the second DU, and the second DU may obtain the part or all of the terminal context of the first DU from the first DU via routing information and address information of the first DU from the first apparatus. In still some other examples, there is no interface between the first DU and the second DU. After a tunnel on a first path is established, the second DU may obtain the part or all of the terminal context of the first DU from the first DU through the tunnel on the first path. For specific content of the first path, refer to the manner h3. For a manner of establishing the tunnel on the first path, refer to the manner h3. Details are not described herein again.

In the manner g3, the second DU may obtain the part or all of the terminal context of the first DU from the first apparatus or the first DU based on the first notification information from the first apparatus, so that the part or all of the terminal context of the first DU can be obtained on demand, and signaling overheads are reduced while the resource collaboration efficiency of the DU is improved.

**Manner g4:** After determining the second DU as the DU that assists the first DU in the communication or the candidate DU that is capable of assisting the first DU in the communication, the first DU sends the part or all of the terminal context of the first DU to the second DU.

The manner g4 includes steps H1 and H2.

H1: The first DU determines the second DU as the DU that assists the first DU in the communication or the candidate DU that is capable of assisting the first DU in the communication.

For specific content of H1, refer to step C1. Details are not described herein again.

Optionally, when the resource of the first DU is overloaded, the first DU may perform step H1. For a manner in which the first DU determines that the resource of the first DU is overloaded, refer to the foregoing condition 2. Details are not described herein again.

H2: The first DU sends the part or all of the terminal context of the first DU to the second DU. Accordingly, the second DU receives the part or all that is of the terminal context of the first DU and that is sent by the first DU.

The first DU may send the part or all of the terminal context of the first DU to the second DU in the manner h1, the manner h2, or the manner h3. Details are not described herein again.

In the manner g4, after determining the second DU as the DU that assists the first DU in the communication or the candidate DU that is capable of assisting the first DU in the communication, the first DU may send the part or all of the terminal context of the first DU to the second DU. In this way, the second DU can quickly obtain the part or all of the terminal context of the first DU, so that the resource collaboration efficiency of the DU can be improved.

Optionally, the manner g4 may be combined with the method in FIG. 4, or may be a method independent of the method shown in FIG. 4. It should be understood that, when a plurality of DUs are determined as collaborative DUs or backup DUs for the first DU, manners in which the plurality of DUs obtain the part or all of the terminal context of the first DU may be the same, or may be different.

In some possible manners, the first apparatus determines the second DU as the DU that assists the first DU in the communication. The method shown in FIG. 4 further includes steps I1 and I2.

I1: The first apparatus sends a first data packet to the second DU. Accordingly, the second DU receives the first data packet from the first apparatus.

The first data packet is a data packet that the second DU assists the first DU in processing. The data packet may be a data packet for uplink transmission, or may be a data packet for downlink transmission. The first data packet may be a data packet that needs to be processed by the first DU when no terminal performs access, or may be a data packet requested or generated by one or more terminals served by the first DU. In other words, the DUs may collaborate with each other on a data packet at a node granularity, or may collaborate with each other on a data packet at a terminal granularity.

The first apparatus may send the first data packet to the second DU in a plurality of manners. For example, the first apparatus may send the first data packet to the second DU in the manner b1 or the manner b2. For example, when the first apparatus sends the first data packet to the second DU in the manner b2, the first apparatus may send the first data packet to the second DU via the first DU.

I2: The second DU sends a second data packet to the first apparatus. Accordingly, the first apparatus receives the second data packet sent by the second DU.

The second data packet may be a data packet obtained by directly processing the first data packet by using a protocol stack of the second DU, or may be a data packet obtained by the second DU by processing the first data packet by using the protocol stack based on the part or all of the terminal context.

The second DU may send the second data packet to the first apparatus in a plurality of manners. For example, the second DU may send the second data packet to the first apparatus in the manner b1 or the manner b2.

According to the method, the second DU can assist the first DU in the communication, to reduce a transmission delay of data corresponding to the first DU, and improve the resource utilization of the DU.

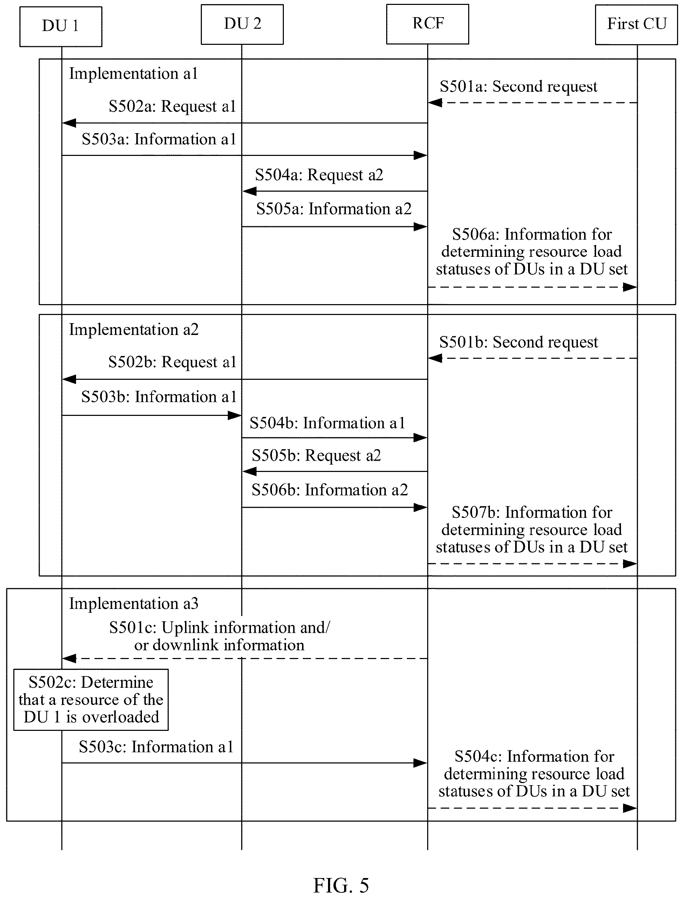

An embodiment of this application provides another communication method. The method is a possible example in which the first apparatus obtains information for determining load monitoring of a DU in the method shown in FIG. 4. The method is applicable to the communication system shown in FIG. 2. Refer to a flowchart shown in FIG. 5. The following specifically describes a procedure of the method by using an example in which at least one DU includes a DU 1 and a DU 2.

As shown in FIG. 5, an RCF in the first apparatus may obtain, in a plurality of implementations, the information for determining the load monitoring of the DU, to manage load monitoring of the at least one DU. The plurality of implementations are, for example, an implementation a1, an implementation a2, or an implementation a3.

**Implementation a1:** The DU 1 and the DU 2 report, through interfaces between the DUs and the RCF based on indications of the RCF, information for determining resource load statuses.

The implementation a1 includes steps S501a to S506a.

S501a: A first CU sends a second request to the RCF, where the second request is for requesting the RCF to obtain the information for determining the resource load statuses of the DU 1 and the DU 2. Therefore, the second request may also be referred to as a resource load status request.

For specific content of the second request, refer to the descriptions of the second request in S401. A repeated part is not described again.

Optionally, the second request further includes a DU set, and the DU set is a set of DUs whose resource load statuses need to be monitored by the RCF. The DU set may include one or more DUs managed by the RCF. The following uses an example in which the DU set includes the DU 1 and the DU 2 for description.

S502a: The RCF sends a request a1 to the DU 1, where the request a1 is for requesting to obtain the information a1 for determining the resource load status of the DU 1.

For specific content of the request al, refer to the descriptions of the first request in S401. For specific content of the information a1, refer to the descriptions of the first information in S401. Only the first DU is replaced with the DU 1. Details are not described herein again.

S503a: The DU 1 sends the information a1 to the RCF through the interface between the DU 1 and the RCF.

S504a: The RCF sends a request a2 to the DU 2, where the request a2 is for requesting to obtain the information a2 for determining the resource load status of the DU 2.

For specific content of the request a2, refer to the descriptions of the first request in S401. For specific content of the information a2, refer to the descriptions of the first information in S401. Only the first DU is replaced with the DU 2. Details are not described herein again.

Content of the request a2 and content of the request a1 may be the same. For example, the request a2 and the request a1 may be a request broadcast by the RCF. Alternatively, the content of the request a2 and the content of the request al may be different. For example, the request a2 and the request a1 may be unicasted by the RCF.

S505a: The DU 2 sends the information a2 to the RCF through the interface between the DU 2 and the RCF.

An execution sequence of S502a and S503a and S504a and S505a is not limited in this application.

S506a: The RCF feeds back, to the first CU in a DU set manner, the information for determining the resource load statuses of the DUs in the DU set.

For specific content of the information for determining the resource load statuses of the DUs in the DU set, refer to the first information in S401. Details are not described herein again.

S501a and S506a are optional steps. It should be understood that S506a does not depend on S501a. In other words, regardless of whether the implementation a1 includes S501a, the method may include S506a.

**Implementation a2:** The DU 1 reports, via the DU 2 based on an indication of the RCF, information for determining a resource load status.

The implementation a2 includes steps S501b to S507b.

S501b: A first CU sends a second request to the RCF, where the second request is for requesting the RCF to obtain information for determining resource load statuses of the DU 1 and the DU 2.

S502b: The RCF sends a request a1 to the DU 1, where the request a1 is for requesting to obtain the information a1 for determining the resource load status of the DU 1.

For specific content of S501b and S502b, refer to S501a and S502a. Details are not described herein again.

S503b: The DU 1 sends the information a1 to the DU 2 through an interface between the DU 1 and the DU 2.

S504b: The DU 2 sends the information a1 to the RCF through an interface between the DU 2 and the RCF.

S505b: The RCF sends a request a2 to the DU 2, where the request a2 is for requesting to obtain the information a2 for determining the resource load status of the DU 2.

S506b: The DU 2 sends the information a2 to the RCF through the interface between the DU 2 and the RCF.

For specific content of S505b and S506b, refer to S504a and S505a. Details are not described herein again.

An execution sequence of S502b to S504b and S505b and S506b is not limited in this application.

S507b: The RCF feeds back, to the first CU in a DU set manner, the information for determining the resource load statuses of the DUs in a DU set.

For specific content of S507b, refer to S506a. Details are not described herein again.

S501b and S507b are optional steps. It should be understood that S507b does not depend on S501b. In other words, regardless of whether the implementation a2 includes S501b, S507b may be included.

**Implementation a3:** The DU 1 reports, based on a preconfigured monitoring configuration, or based on an information transmission status and the preconfigured monitoring configuration, information for determining a resource load status.

The implementation a3 includes steps S501c to S504c.

S501c: The RCF sends uplink information and/or downlink information to the DU 1. The uplink information and/or the downlink information may be control plane information, or may be user plane information.

S502c: The DU 1 determines that a resource of the DU 1 is overloaded.

For specific content of S502c, refer to the descriptions of determining, by the first DU, that the resource of the first DU is overloaded in S401. A repeated part is not described again. Optionally, the DU 1 may determine, based on the monitoring configuration preconfigured by an operation, maintenance, and management (operation, administration, and maintenance, OAM), that the resource of the DU 1 is overloaded. The monitoring configuration may include the information in the first request in S401. Details are not described herein again.

S503c: The DU 1 sends, to the RCF, the information a1 for determining the resource load status of the DU 1.

For specific content of the information a1, refer to the first information in S401. Only the first DU is replaced with the DU 1. Details are not described herein again.

The DU 1 may send the information a1 to the RCF in the manner b1 or the manner b2. Details are not described herein.

S504c: The RCF feeds back, to a first CU in a DU set manner, information for determining resource load statuses of DUs in a DU set.

For specific content of S504c, refer to S506a. Details are not described herein again.

S501c and S504c are optional steps.

It should be understood that, in the implementation a3, the DU 1 is used as an example for description, and another DU (for example, the DU 2) may also be processed in a similar manner.

The method shown in FIG. 5 shows a plurality of manners in which the RCF learns of the resource load statuses of the DUs. In this way, the RCF can conveniently and flexibly learn of the resource load statuses of the DUs, to manage resource collaboration of the DUs based on the resource load statuses of the DU.

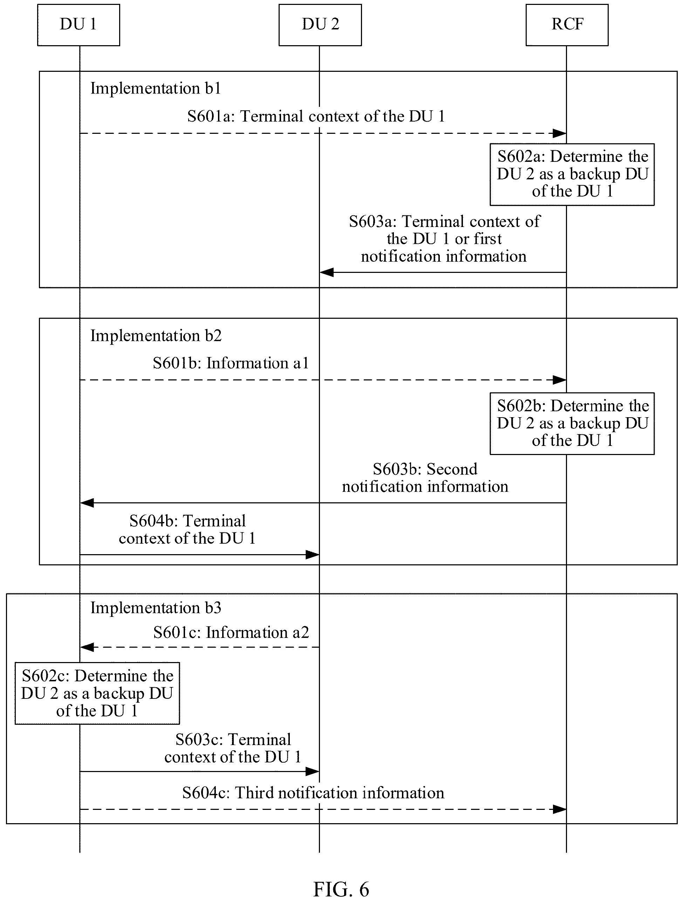

An embodiment of this application provides still another communication method. The method is a possible example in which the backup DU obtains the terminal context of the first DU in the method shown in FIG. 4. The terminal context may be a terminal context of an L1 and/or an L2. The method is applicable to the communication system shown in FIG. 2. Refer to a flowchart shown in FIG. 6. The following specifically describes a procedure of the method by using an example in which a first DU is a DU 1 and a second DU is a DU 2.

As shown in FIG. 6, the DU 2 may obtain a terminal context of the DU 1 in a plurality of implementations, for example, an implementation b1, an implementation b2, or an implementation b3.

**Implementation b1:** The DU 1 sends the terminal context of the first DU to an RCF, and the DU 2 obtains the terminal context of the first DU from the RCF.

The implementation b1 may include S601a to S603a.

S601a: The DU 1 sends the terminal context of the DU 1 to the RCF.

Optionally, the DU 1 may send the terminal context of the DU 1 to the RCF when a resource of the DU 1 is overloaded.

In some examples, after receiving the terminal context of the DU 1, the RCF may store the terminal context of the DU 1.

For specific content of S601a, refer to step B1. Details are not described herein again.

S602a: The RCF determines, based on capability information and/or a resource load status of at least one DU managed by the RCF, the DU 2 as a candidate DU that is capable of assisting the DU 1 in communication, that is, determines the DU 2 as a backup DU of the DU 1.

For specific content of S602a, refer to the manner f1. Details are not described herein again.

It should be understood that the RCF may determine one or more backup DUs for the DU 1. The following uses an example in which the one or more backup DUs are the DU 2 for description.

S603a: The RCF sends the terminal context of the DU 1 to the DU 2, or the RCF sends first notification information to the DU 2.

The first notification information may be for notifying that the DU 2 is the candidate DU that is capable of assisting the DU 1 in the communication. After receiving the first notification information, the DU 2 may obtain the terminal context of the DU 1 from the RCF or the DU 1. For specific content, refer to step G2. Details are not described herein again.

S601a is an optional step. For example, if the DU 2 obtains the terminal context of the DU 1 from the DU 1 after receiving the first notification information, the implementation b1 may not include S601a.

**Implementation** b2: An RCF notifies the DU 1 that the DU 2 is a candidate DU that is capable of assisting the DU 1 in communication, and the DU 1 sends the terminal context of the first DU to the DU 2.

The implementation b2 may include S601b to S604b.

S601b: The DU 1 sends, to the RCF, information a1 for determining a resource load status of the DU 1.

For specific content of S601b, refer to S503c. Details are not described herein again.

S601b is an optional step.

S602b: The RCF determines, based on capability information and/or a resource load status of at least one DU managed by the RCF, the DU 2 as the candidate DU that is capable of assisting the DU 1 in the communication, that is, determines the DU 2 as a backup DU of the DU 1.

For specific content of S602b, refer to S602a. Details are not described herein again.

S603b: The RCF sends second notification information to the DU 1, where the second notification information is for notifying the DU 1 that the DU 2 is the candidate DU that is capable of assisting the DU 1 in the communication.

S604b: The DU 1 sends the terminal context of the DU 1 to the DU 2.

For specific content of S604b, refer to step E2. Details are not described herein again.

**Implementation b3:** The DU 1 determines that the DU 2 is a candidate DU that is capable of assisting the DU 1 in communication, and sends the terminal context of the first DU to the DU 2.

The implementation b3 may include S601c to S604c.

S601c: The DU 1 receives information a2 that is sent by the DU 2 and that is for determining a resource load status of the DU 2.

For specific content of the information a2, refer to the first information in S401. Only the first DU is replaced with the DU 2. Details are not described herein again.

It should be understood that the DU 1 may obtain information for determining a resource load status of one or more DUs. Herein, an example in which the DU 1 obtains the information a2 that is sent by the DU 2 and that is for determining the resource load status of the DU 2 is used for description.

S602c: The DU 1 determines the DU 2 as the candidate DU that is capable of assisting the DU 1 in the communication, that is, determines the DU 2 as a backup DU of the DU 1.

For specific content of S602c, refer to step C1. Details are not described herein again.

S603c: The DU 1 sends the terminal context of the DU 1 to the DU 2.

For specific content of S603c, refer to step E2. Details are not described herein again.

S604c: The DU 1 sends third notification information to an RCF, where the third notification information is for notifying the RCF that the DU 2 is the candidate DU that is capable of assisting the DU 1 in the communication.

For specific content of S604c, refer to step C2. Details are not described herein again.

An execution sequence of S603c and S604c is not limited in this application.

S601c and S604c are optional steps.

The method shown in FIG. 6 shows a plurality of manners in which the backup DU obtains the terminal context of the DU 1. In this way, the backup DU can conveniently and flexibly obtain the terminal context of the DU 1, to back up the terminal context of the DU 1. When the backup DU is configured to assist the DU 1 in the communication, the backup DU may quickly assist the DU 1 in the communication based on the backup terminal context of the DU 1, to improve resource collaboration efficiency of a DU.

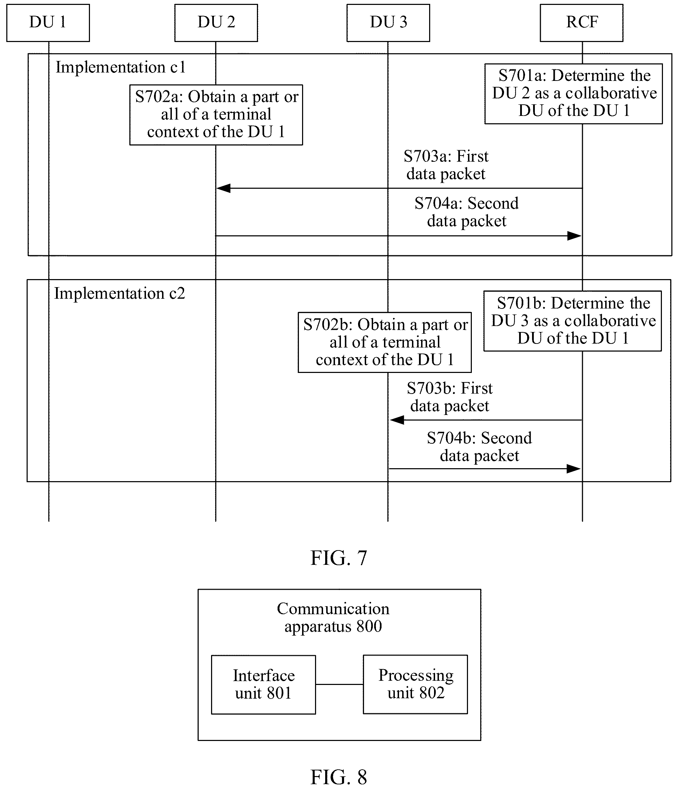

An embodiment of this application provides still another communication method. The method is a possible example in which the second DU assists the first DU in the communication in the method shown in FIG. 4. The method is applicable to the communication system shown in FIG. 2. Refer to a flowchart shown in FIG. 7. The following specifically describes a procedure of the method by using an example in which a first DU is a DU 1 and a second DU is a DU 2 or a DU 3. There is an interface between the DU 1 and the DU 2, there is no interface between the DU 1 and the DU 3, and there is an interface between the DU 2 and the DU 3.

As shown in FIG. 7, the second DU may assist the first DU in communication in a plurality of implementations, for example, an implementation c1 or an implementation c2.

**Implementation c1:** The second DU is the DU 2, and the DU 2 assists the DU 1 in the communication.

The implementation c1 may include S701a to S704a.

S701a: An RCF determines the DU 2 as a DU that assists the DU 1 in the communication, that is, determines the DU 2 as a collaborative DU of the DU 1.

Optionally, after determining that a resource of the DU 1 is overloaded, the RCF determines the DU 2 as the DU that assists the DU 1 in the communication.

For specific content of S701a, refer to S401 and S402. Details are not described herein again.

S702a: The DU 2 obtains a part or all of a terminal context of the DU 1. The terminal context may be a terminal context of an L1 and/or an L2.

For specific content of S702a, refer to the manner g1, the manner g2, the manner g3, or the manner g4, and further refer to the implementation b1, the implementation b2, or the implementation b3. A repeated part is not described again.

When the DU 2 obtains the part or all of the terminal context of the DU 1 from the DU 1, the DU 2 may obtain the part or all of the terminal context of the DU 1 through the interface between the DU 1 and the DU 2, or may obtain the part or all of the terminal context of the DU 1 via the RCF.

S703a: The RCF sends a first data packet to the DU 2.

Optionally, the RCF may further indicate, to the DU 2, that a next-hop node after processing of the first data packet is completed is the RCF.

S704a: After completing the processing of the first data packet, the DU 2 sends a second data packet to the RCF.

For specific content of S703a and S704a, refer to steps I1 and I2. Details are not described herein again.

Optionally, when the DU 2 assists the DU 1 in the communication, the DU 1 and the DU 2 may respectively process different data packets. The following uses an example in which the data packet processed by the DU 1 is a third data packet for description. In some examples, the RCF may first send the first data packet and the third data packet to the DU 1, and indicate, to the DU 1, that a next-hop node after processing of the third data packet is completed is the RCF and that a next-hop node after processing of the first data packet is completed is the DU 2. After processing the third data packet, the DU 1 may send a processed third data packet to the RCF, and send the first data packet to the DU 2. A sequence in which the DU 1 processes the third data packet and sends the first data packet is not limited in this application. In some other examples, the RCF sends the third data packet to the DU 1, and indicates, to the DU 1, that a next-hop node after processing of the third data packet is completed is the RCF. After processing the third data packet, the DU 1 may send a processed third data packet to the RCF. The RCF may send the first data packet to the DU 2, and indicate, to the DU 2, that a next-hop node after processing of the first data packet is completed is the RCF. After processing the first data packet, the DU 2 may send the second data packet to the RCF. A sequence in which the RCF sends the third data packet and the first data packet is not limited in this application. In the manner, collaborative transmission between DUs may be completed.

**Implementation c2:** The second DU is the DU 3, and the DU 3 assists the DU 1 in the communication.

The implementation c2 may include S701b to S704b.

S701b: An RCF determines the DU 3 as a DU that assists the DU 1 in communication, that is, determines the DU 3 as a collaborative DU of the DU 1.

Optionally, after determining that a resource of the DU 1 is overloaded, the RCF determines the DU 3 as the DU that assists the DU 1 in the communication.

For specific content of S701b, refer to S401 and S402. Details are not described herein again.

S702b: The DU 3 obtains a part or all of a terminal context of the DU 1. The terminal context may be a terminal context of an L1 and/or an L2.

For specific content of S702b, refer to the manner g1, the manner g2, the manner g3, or the manner g4, and further refer to the implementation b1, the implementation b2, or the implementation b3. A repeated part is not described again.

Optionally, when the DU 3 obtains the part or all of the terminal context of the DU 1 from the DU 1, the DU 3 may obtain the part or all of the terminal context of the DU 1 in the manner h2 or the manner h3, or may obtain the part or all of the terminal context of the DU 1 via the RCF.

S703b: The RCF sends a first data packet to the DU 3.

Optionally, the RCF may further indicate, to the DU 3, that a next-hop node after processing of the first data packet is completed is the RCF.

S704b: After completing the processing of the first data packet, the DU 3 sends a second data packet to the RCF.

For specific content of S703b and S704b, refer to steps I1 and I2. Details are not described herein again.

Optionally, when the DU 3 assists the DU 1 in the communication, the DU 1 and the DU 3 may respectively process different data packets. For specific content, refer to the descriptions that the DU 1 and the DU 2 may respectively process the different data packets in the implementation c1. Only the DU 2 is replaced with the DU 3. Details are not described herein again.

According to the method shown in FIG. 7, resource collaboration of a DU can be implemented without signaling transmission for resource collaboration negotiation between CUs, so that resource collaboration efficiency of the DU can be improved, a processing delay of the DU can be reduced, and resource utilization of the DU can be improved.

Based on a same technical concept as the foregoing method embodiments, an embodiment of this application provides a communication apparatus in FIG. 8, and the communication apparatus may be configured to perform functions of related steps in the foregoing method embodiments. The functions may be implemented by hardware, or may be implemented by software or by hardware executing corresponding software. The hardware or the software includes one or more modules corresponding to the foregoing functions. A structure of the communication apparatus is shown in FIG. 8, and includes an interface unit 801 and a processing unit 802. The communication apparatus 800 may be a first apparatus or a module (for example, a circuit or a chip) in the first apparatus, or may be a logical node, a logical module, or software that can implement all or a part of functions of the first apparatus; the communication apparatus 800 may be a first DU or a module (for example, a circuit or a chip) in the first DU, or may be a logical node, a logical module, or software that can implement all or a part of functions of the first DU; or the communication apparatus 800 may be a second DU or a module (for example, a circuit or a chip) in the second DU, or may be a logical node, a logical module, or software that can implement all or a part of functions of the second DU. In addition, the communication apparatus 800 may implement the communication methods provided in the foregoing embodiments of this application and the instances. Functions of the units in the communication apparatus 800 are described below.

The interface unit 801 is configured to input and/or output information. When outputting the information, the interface unit 801 may output the information to an apparatus other than the communication apparatus 800, or may output the information to another unit in the communication apparatus 800. In some manners, the interface unit 801 may be implemented by using at least one of a physical interface, a communication module, a communication interface, and an input/output interface. In some other manners, the interface unit 801 may be implemented by using an interface circuit, for example, a mobile communication module. The mobile communication module may include one or more of at least one antenna, at least one filter, a switch, a power amplifier, a low noise amplifier (low noise amplifier, LNA), and the like.

The processing unit 802 may be configured to support the communication apparatus 800 in performing processing actions in the foregoing method embodiments. The processing unit 802 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

In an implementation, the communication apparatus 800 is used in the first apparatus in the embodiment of this application shown in FIG. 4. A specific function of the processing unit 802 in this implementation is described below.

The processing unit 802 is configured to: determine that a resource of the first DU is overloaded, where the first DU is a DU in the at least one DU; and determine the second DU as a DU that assists the first DU in communication or a candidate DU that is capable of assisting the first DU in the communication, where the second DU is a DU other than the first DU in the at least one DU.

In some possible manners, the processing unit 802 is further configured to: receive, through the interface unit 801, a part or all that is of a terminal context of the first DU and that is sent by the first DU; and send the part or all of the terminal context of the first DU to the second DU through the interface unit 801.

In some other possible manners, the processing unit 802 is further configured to send first notification information to the second DU through the interface unit 801, to enable the second DU to obtain a part or all of a terminal context of the first DU from the communication apparatus 800 or the first DU when the second DU assists the first DU in the communication, where the first notification information is for notifying that the second DU is the DU that assists the first DU in the communication or the candidate DU that is capable of assisting the first DU in the communication.

Optionally, when the second DU obtains the part or all of the terminal context of the first DU from the communication apparatus 800, the processing unit 802 is further configured to receive, through the interface unit 801, the part or all that is of the terminal context of the first DU and that is sent by the first DU.

In still some other possible manners, the processing unit 802 is further configured to send second notification information to the first DU through the interface unit 801, to enable the first DU to send a part or all of a terminal context of the first DU to the second DU, where the second notification information is for notifying the first DU that the second DU is the DU that assists the first DU in the communication or the candidate DU that is capable of assisting the first DU in the communication.

In some implementations, the processing unit 802 is further configured to send routing information and address information of the second DU to the first DU through the interface unit 801, where the routing information indicates a route for communication between the first DU and the second DU.

In some other implementations, the processing unit 802 is further configured to send, through the interface unit 801, information for establishing a tunnel on a first path, where the first path is a path for information transmission between the first DU and the second DU, and the first path includes one or more segments of tunnels.

In some possible manners, when determining the second DU as the DU that assists the first DU in the communication, the processing unit 802 is further configured to: send a first data packet to the second DU through the interface unit 801, where the first data packet is a data packet that the second DU assists the first DU in processing; and receive, through the interface unit 801, a second data packet sent by the second DU, where the second data packet is a data packet obtained by the second DU by processing the first data packet based on the part or all of the terminal context of the first DU.

In some designs, the processing unit 802 is configured to: receive, through the interface unit 801, first information sent by the first DU, where the first information is for determining a resource load status of the first DU; and determine, based on the first information, that the resource of the first DU is overloaded.

Optionally, the processing unit 802 is configured to: receive, through the interface unit 801 and an interface between the communication apparatus 800 and the first DU, the first information sent by the first DU; or receive, via a third DU through the interface unit 801, the first information sent by the first DU, where the third DU is a DU other than the first DU in the at least one DU.

In some possible manners, when a first condition includes that the first DU receives a first request from the communication apparatus 800, the processing unit 802 is further configured to receive a second request from the first CU through the interface unit 801, where the second request is for requesting the communication apparatus 800 to obtain information for determining resource load statuses of N DUs, the N DUs include the first DU, and N is a positive integer.

In some other designs, the processing unit 802 is configured to: receive, through the interface unit 801, the part or all that is of the terminal context of the first DU and that is sent by the first DU, where the part or all of the terminal context of the first DU is sent by the first DU when the resource of the first DU is overloaded; and determine that the resource of the first DU is overloaded.

In some examples, the processing unit 802 is configured to determine, based on capability information and/or a resource load status of the at least one DU, the second DU as the DU that assists the first DU in the communication or the candidate DU that is capable of assisting the first DU in the communication.

In some other examples, the processing unit 802 is configured to: receive, through the interface unit 801, third notification information sent by the first DU, where the third notification information is for notifying the communication apparatus 800 that the second DU is the DU that assists the first DU in the communication or the candidate DU that is capable of assisting the first DU in the communication; and determine, based on the third notification information, the second DU as the DU that assists the first DU in the communication or the candidate DU that is capable of assisting the first DU in the communication.

In another implementation, the communication apparatus 800 is used in the first DU in the embodiment of this application shown in FIG. 4. A specific function of the processing unit 802 in this implementation is described below.

The processing unit 802 is configured to: receive, through the interface unit 801, second notification information sent by the first apparatus, where the second notification information is for notifying the communication apparatus 800 that the second DU is a DU that assists the communication apparatus 800 in communication or a candidate DU that is capable of assisting the communication apparatus 800 in the communication, the communication apparatus 800 is a DU in the at least one DU, and the second DU is a DU other than the communication apparatus 800 in the at least one DU; and send a part or all of a terminal context of the communication apparatus 800 to the second DU through the interface unit 801.

Optionally, the processing unit 802 is configured to send the part or all of the terminal context of the communication apparatus 800 to the second DU through an interface between the communication apparatus 800 and the second DU or via the first apparatus through the interface unit 801.

In some possible manners, the processing unit 802 is further configured to: receive routing information and address information of the second DU from the first apparatus through the interface unit 801, where the routing information indicates a route for communication between the communication apparatus 800 and the second DU; and send the part or all of the terminal context of the communication apparatus 800 to the second DU through the interface unit 801 based on the routing information and the address information of the second DU.

In some other possible manners, the processing unit 802 is further configured to: receive, from the first apparatus through the interface unit 801, information for establishing a tunnel on a first path, where the first path is a path for information transmission between the communication apparatus 800 and the second DU, and the first path includes one or more segments of tunnels; and send the part or all of the terminal context of the communication apparatus 800 to the second DU through the interface unit 801 and the tunnel on the first path.

In some designs, the processing unit 802 is further configured to send first information to the first apparatus through the interface unit 801, where the first information is for determining a resource load status of the communication apparatus 800.

Optionally, the processing unit 802 is configured to: when a first condition is met, send the first information to the first apparatus through the interface unit 801, where the first condition includes at least one of the following: The communication apparatus 800 receives a first request from the first apparatus, where the first request is for requesting to obtain the first information; or the first request includes one or more conditions for the communication apparatus 800 to sending the first information, and the one or more conditions are satisfied; the resource of the communication apparatus 800 is overloaded; and during information transmission, the resource of the communication apparatus 800 is overloaded.

For example, the processing unit 802 is configured to: send the first information to the first apparatus through the interface unit 801 and an interface between the first apparatus and the communication apparatus 800; or send the first information to the first apparatus via a third DU, where the third DU is a DU other than the communication apparatus 800 in the at least one DU.

In still another implementation, the communication apparatus 800 is used in the second DU in the embodiment of this application shown in FIG. 4. A specific function of the processing unit 802 in this implementation is described below.

The processing unit 802 is configured to: receives, through the interface unit 801, first notification information sent by the first apparatus, where the first notification information is for notifying that the communication apparatus 800 is a DU that assists the first DU in communication or a candidate DU that is capable of assisting the first DU in the communication, the first DU is a DU in the at least one DU, and the communication apparatus 800 is a DU other than the first DU in the at least one DU; and obtain a part or all of a terminal context of the first DU from the first apparatus or the first DU through the interface unit 801.

Optionally, when the first notification information is for notifying that the communication apparatus 800 is the DU that assists the first DU in the communication, the processing unit 802 is configured to: receive, through the interface unit 801, a first data packet sent by the first apparatus, where the first data packet is a data packet that the communication apparatus 800 assists the first DU in processing; and send a second data packet to the first apparatus through the interface unit 801, where the second data packet is a data packet obtained by the communication apparatus 800 by processing the first data packet based on the part or all of the terminal context.

In yet another implementation, the communication apparatus 800 is used in the first DU in the embodiment of this application shown in FIG. 4. A specific function of the processing unit 802 in this implementation is described below.

The processing unit 802 is configured to: when a resource of the communication apparatus 800 is overloaded, determine the second DU as a DU that assists the communication apparatus 800 in communication or a candidate DU that is capable of assisting the communication apparatus 800 in the communication, where the communication apparatus 800 is a DU in the at least one DU, and the second DU is a DU other than the communication apparatus 800 in the at least one DU; and send a part or all of a terminal context of the communication apparatus 800 to the second DU through the interface unit 801.

For example, the processing unit 802 is configured to send the part or all of the terminal context of the communication apparatus 800 to the second DU through an interface between the communication apparatus 800 and the second DU or via the first apparatus through the interface unit 801.

Optionally, the processing unit 802 is further configured to send third notification information to the first apparatus through the interface unit 801, where the third notification information is for notifying the first apparatus that the second DU is the DU that assists the communication apparatus 800 in the communication or the candidate DU that is capable of assisting the communication apparatus 800 in the communication.

For more detailed descriptions of the processing unit 802 and the interface unit 801, directly refer to the related descriptions in the method embodiments shown in FIG. 4 to FIG. 7. Details are not described herein.

It should be noted that, in the foregoing embodiment of this application, division into the modules is an example, is merely logical function division, and may be other division during actual implementation. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing to the conventional technology, or all or a part of the technical solutions may be implemented in the form of a software product. The computer software product is stored in a storage medium and includes several instructions for instructing a computer device (which may be a personal computer, a server, a network device, or the like) or a processor (processor) to perform all or a part of the steps of the methods in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

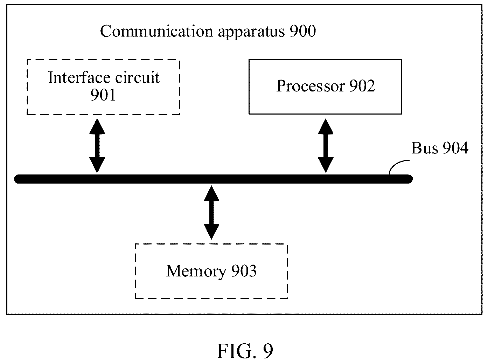

Based on a same technical concept, an embodiment of this application provides a communication apparatus shown in FIG. 9, and the communication apparatus may be configured to perform related steps in the foregoing method embodiments. The communication apparatus may be a first apparatus or a module (for example, a circuit or a chip) in the first apparatus, or may be a logical node, a logical module, or software that can implement all or a part of functions of the first apparatus; the communication apparatus may be a first DU or a module (for example, a circuit or a chip) in the first DU, or may be a logical node, a logical module, or software that can implement all or a part of functions of the first DU; or the communication apparatus may be a second DU or a module (for example, a circuit or a chip) in the second DU, or may be a logical node, a logical module, or software that can implement all or a part of functions of the second DU. In addition, the communication apparatus may implement the communication methods provided in the foregoing embodiments of this application and the instances, and has the functions of the communication apparatus shown in FIG. 8. Refer to FIG. 9, the communication apparatus 900 includes a processor 902. Optionally, the communication apparatus 900 further includes an interface circuit 901 and a memory 903. The interface circuit 901, the processor 902, and the memory 903 are coupled to each other.

Optionally, the interface circuit 901, the processor 902, and the memory 903 are coupled to each other through a bus 904. The bus 904 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 9, but this does not mean that there is only one bus or only one type of bus.

The interface circuit 901 is configured to input and/or output information. When outputting the information, the interface circuit 901 may output the information to an apparatus other than the communication apparatus 900, or may output the information to another unit in the communication apparatus 900. For example, the interface circuit 901 may be implemented by using at least one of a physical interface, a communication module, a communication interface, an input/output interface, and a mobile communication module. The mobile communication module may include one or more of at least one antenna, at least one filter, a switch, a power amplifier, an LNA, and the like.

The processor 902 may be configured to support the communication apparatus 900 in performing processing actions in the foregoing method embodiments. When the communication apparatus 900 is configured to implement the foregoing method embodiments, the processor 902 may be further configured to implement functions of the processing unit 802. The processor 902 may be a CPU, or may be another general-purpose processor, a DSP, an ASIC, an FPGA or another programmable logic device, a transistor logic device, a hardware component, or any combination thereof. The general-purpose processor may be a microprocessor or any regular processor.

In an implementation, the communication apparatus 900 is used in the first apparatus in the embodiment of this application shown in FIG. 4. A specific function of the processor 902 in this implementation is described below.

The processor 902 is configured to: determine that a resource of the first DU is overloaded, where the first DU is a DU in the at least one DU; and determine the second DU as a DU that assists the first DU in communication or a candidate DU that is capable of assisting the first DU in the communication, where the second DU is a DU other than the first DU in the at least one DU.

In another implementation, the communication apparatus 900 is used in the first DU in the embodiment of this application shown in FIG. 4. A specific function of the processor 902 in this implementation is described below.

The processor 902 is configured to: receive, through the interface circuit 901, second notification information sent by the first apparatus, where the second notification information is for notifying the communication apparatus 900 that the second DU is a DU that assists the communication apparatus 900 in communication or a candidate DU that is capable of assisting the communication apparatus 900 in the communication, the communication apparatus 900 is a DU in the at least one DU, and the second DU is a DU other than the communication apparatus 900 in the at least one DU; and send a part or all of a terminal context of the communication apparatus 900 to the second DU through the interface circuit 901.

In still another implementation, the communication apparatus 900 is used in the second DU in the embodiment of this application shown in FIG. 4. A specific function of the processor 902 in this implementation is described below.

The processor 902 is configured to: receives, through the interface circuit 901, first notification information sent by the first apparatus, where the first notification information is for notifying that the communication apparatus 900 is a DU that assists the first DU in communication or a candidate DU that is capable of assisting the first DU in the communication, the first DU is a DU in the at least one DU, and the communication apparatus 900 is a DU other than the first DU in the at least one DU; and obtain a part or all of a terminal context of the first DU from the first apparatus or the first DU through the interface circuit 901.

In yet another implementation, the communication apparatus 900 is used in the first DU in the embodiment of this application shown in FIG. 4. A specific function of the processor 902 in this implementation is described below.

The processor 902 is configured to: when a resource of the communication apparatus 900 is overloaded, determine the second DU as a DU that assists the communication apparatus 900 in communication or a candidate DU that is capable of assisting the communication apparatus 900 in the communication, where the communication apparatus 900 is a DU in the at least one DU, and the second DU is a DU other than the communication apparatus 900 in the at least one DU; and send a part or all of a terminal context of the communication apparatus 900 to the second DU through the interface circuit 901.

For the specific function of the processor 902, refer to the descriptions in the communication method provided in the foregoing embodiments of this application and the instances, and the descriptions of the specific functions of the communication apparatus 800 in the embodiment of this application shown in FIG. 8. Details are not described herein again.

The memory 903 is configured to store program instructions, data, and/or the like. Specifically, the program instructions may include program code. The program code includes computer operation instructions. The memory 903 may include a RAM, and may further include a non-volatile memory (non-volatile memory), for example, at least one magnetic disk memory. The processor 902 executes the program instructions stored in the memory 903, and uses the data stored in the memory 903, to implement the foregoing function, to implement the communication method provided in the foregoing embodiments of this application. The memory 903 may be integrated with the processor 902, or may be a memory outside the communication apparatus.

It may be understood that the memory 903 in FIG. 9 in this application may be a volatile memory or a non-volatile memory, or may include a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and is used as an external cache. By way of example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and the methods in this specification aims to include, but not limited to, these and any memory of another appropriate type.

Based on the foregoing embodiments, an embodiment of this application further provides a computer program product including computer-executable instructions. When the computer program product is run, the methods provided in the foregoing embodiments are enabled to be performed.

Based on the foregoing embodiments, an embodiment of this application further provides a computer-readable storage medium. The computer-readable storage medium stores a computer program. When the computer program is executed by a computer, the computer is enabled to perform the methods provided in the foregoing embodiments.

The storage medium may be any usable medium that can be accessed by the computer. The following provides an example but does not impose a limitation: The computer-readable medium may include a RAM, a ROM, an EEPROM, a CD-ROM or another optical disc storage, a magnetic disk storage medium or another magnetic storage device, or any other medium that can be for carrying or storing expected program code in a form of instructions or a data structure and that can be accessed by the computer.

Based on the foregoing embodiments, an embodiment of this application further provides a chip. The chip is configured to read a computer program stored in a memory, to implement the methods provided in the foregoing embodiments.

Based on the foregoing embodiments, an embodiment of this application provides a chip system. The chip system includes a processor, configured to support a computer apparatus in implementing functions related to the devices in the foregoing embodiments. In a possible design, the chip system further includes a memory, and the memory is configured to store a program and data that are necessary for the computer apparatus. The chip system may include a chip, or may include the chip and another discrete device.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be for implementing each procedure and/or each block in the flowcharts and/or the block diagrams and a combination of procedures and/or blocks in the flowcharts and/or the block diagrams. The computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specified function in one or more procedures in the flowcharts and/or in one or more blocks in the block diagrams.

The computer program instructions may alternatively be stored in a computer-readable memory that can guide a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computerimplemented processing. Therefore, the instructions executed on the computer or the another programmable device provide steps for implementing a specified function in one or more procedures in the flowcharts and/or in one or more blocks in the block diagrams.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists. A and B may be singular or plural. In text descriptions of this application, the character "/" generally represents an "or" relationship between associated objects.

It may be understood that various numbers in embodiments of this application are merely used for differentiation for ease of description, and are not for limiting the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. This application is intended to cover these modifications and variations of this application provided that these modifications and variations fall within the scope of the claims of this application and their equivalent technologies.

## Claims

1. A communication system, comprising a first central unit CU, a first apparatus, and at least one distributed unit DU, wherein
the first CU is configured to manage the first apparatus and/or a part or all of the at least one DU; and
the first apparatus is configured to manage resource collaboration of the at least one DU.

2. The system according to claim 1, wherein that the first apparatus is configured to manage the resource collaboration of the at least one DU comprises at least one of the following:
the first apparatus is configured to manage load monitoring of the at least one DU;
the first apparatus is configured to be responsible for backup management on the at least one DU;
the first apparatus is configured to be responsible for path management on information transmission of the at least one DU; and
the first apparatus is configured to be responsible for data migration management on the at least one DU.

3. The system according to claim 1 or 2, wherein the first apparatus is further for transmission of user plane information and/or control plane information exchanged between the first CU and the at least one DU.

4. The system according to claim 1 or 2, wherein the at least one DU comprises a first DU, and the first CU is further configured to exchange user plane information and/or control plane information with the first DU through an interface between the first CU and the first DU.

5. The system according to any one of claims 1 to 4, wherein the at least one DU comprises the first DU, and the first apparatus is further configured to exchange user plane information and/or control plane information with the first DU through an interface between the first apparatus and the first DU.

6. The system according to any one of claims 1 to 5, wherein the at least one DU comprises the first DU and a second DU, wherein the first DU is configured to send user plane information and/or control plane information to the second DU through an interface between the first DU and the second DU; or the first DU is configured to send the user plane information and/or the control plane information to the second DU via the first apparatus.

7. The system according to claim 6, wherein when the first apparatus is configured to exchange the user plane information and the control plane information with the first DU through the interface between the first apparatus and the first DU, and the first DU is configured to exchange user plane information and/or control plane information with the second DU through the interface between the first DU and the second DU or via the first apparatus, the first apparatus is further configured to exchange user plane information and/or control plane information with the first CU through an interface between the first CU and the first apparatus.

8. A communication method based on the system according to any one of claims 1 to 7, wherein the method comprises:
determining, by the first apparatus, that a resource of the first DU is overloaded, wherein the first DU is a DU in the at least one DU; and
determining, by the first apparatus, the second DU as a DU that assists the first DU in communication or a candidate DU that is capable of assisting the first DU in the communication, wherein the second DU is a DU other than the first DU in the at least one DU.

9. The method according to claim 8, the method further comprises:
receiving, by the first apparatus, a part or all that is of a terminal context of the first DU and that is sent by the first DU; and
sending, by the first apparatus, the part or all of the terminal context of the first DU to the second DU.

10. The method according to claim 8, the method further comprises:
sending, by the first apparatus, first notification information to the second DU, to enable the second DU to obtain a part or all of a terminal context of the first DU from the first apparatus or the first DU when the second DU assists the first DU in the communication, wherein the first notification information is for notifying that the second DU is the DU that assists the first DU in the communication or the candidate DU that is capable of assisting the first DU in the communication.

11. The method according to claim 10, wherein when the second DU obtains the part or all of the terminal context of the first DU from the first apparatus, the method further comprises:
receiving, by the first apparatus, the part or all that is of the terminal context of the first DU and that is sent by the first DU.

12. The method according to claim 8, the method further comprises:
sending, by the first apparatus, second notification information to the first DU, to enable the first DU to send a part or all of a terminal context of the first DU to the second DU, wherein the second notification information is for notifying the first DU that the second DU is the DU that assists the first DU in the communication or the candidate DU that is capable of assisting the first DU in the communication.

13. The method according to claim 12, the method further comprises:
sending, by the first apparatus, routing information and address information of the second DU to the first DU, wherein the routing information indicates a route for communication between the first DU and the second DU.

14. The method according to claim 12, the method further comprises:
sending, by the first apparatus, information for establishing a tunnel on a first path, wherein the first path is a path for information transmission between the first DU and the second DU, and the first path comprises one or more segments of tunnels.

15. The method according to any one of claims 9 to 14, wherein when the first apparatus determines the second DU as the DU that assists the first DU in the communication, the method further comprises:
sending, by the first apparatus, a first data packet to the second DU, wherein the first data packet is a data packet that the second DU assists the first DU in processing; and
receiving, by the first apparatus, a second data packet sent by the second DU, wherein the second data packet is a data packet obtained by the second DU by processing the first data packet based on the part or all of the terminal context of the first DU.

16. The method according to any one of claims 8 to 15, wherein determining, by the first apparatus, that the resource of the first DU is overloaded comprises:
receiving, by the first apparatus, first information sent by the first DU, wherein the first information is for determining a resource load status of the first DU; and
determining, by the first apparatus based on the first information, that the resource of the first DU is overloaded.

17. The method according to claim 16, wherein the first information indicates that the resource load status of the first DU is that the resource is overloaded, or the first information comprises resource load data of the first DU, wherein the resource load data of the first DU is for determining the resource load status of the first DU.

18. The method according to claim 16 or 17, wherein the first information is sent by the first DU when a first condition is satisfied, and the first condition comprises at least one of the following:
the first DU receives a first request from the first apparatus, wherein the first request is for requesting to obtain the first information; or the first request comprises one or more conditions for the first DU to send the first information, and the one or more conditions are satisfied;
the resource of the first DU is overloaded; and
during information transmission, the resource of the first DU is overloaded.

19. The method according to any one of claims 16 to 18, wherein receiving, by the first apparatus, the first information sent by the first DU comprises:
receiving, by the first apparatus through an interface between the first apparatus and the first DU, the first information sent by the first DU; or
receiving, by the first apparatus via a third DU, the first information sent by the first DU, wherein the third DU is a DU other than the first DU in the at least one DU.

20. The method according to claim 18 or 19, wherein when the first condition comprises that the first DU receives the first request from the first apparatus, the method further comprises:
receiving, by the first apparatus, a second request from the first CU, wherein the second request is for requesting the first apparatus to obtain information for determining resource load statuses of N DUs, the N DUs comprise the first DU, and N is a positive integer.

21. The method according to claim 20, wherein the second request further indicates at least one of the following:
a trigger condition for any one of the N DUs to send information for determining a resource load status of the DU;
resource types corresponding to the resource load statuses of the N DUs; and
representation forms of the information for determining the resource load statuses of the N DUs.

22. The method according to any one of claims 18 to 21, wherein the first request further indicates at least one of the following:
a resource type corresponding to the resource load status of the first DU; and
a representation form of the first information.

23. The method according to any one of claims 8 to 15, wherein determining, by the first apparatus, that the resource of the first DU is overloaded comprises:
receiving, by the first apparatus, the part or all that is of the terminal context of the first DU and that is sent by the first DU, wherein the part or all of the terminal context of the first DU is sent by the first DU when the resource of the first DU is overloaded; and
determining, by the first apparatus, that the resource of the first DU is overloaded.

24. The method according to any one of claims 8 to 23, wherein determining, by the first apparatus, the second DU as the DU that assists the first DU in the communication or the candidate DU that is capable of assisting the first DU in the communication comprises:
determining, by the first apparatus based on capability information and/or a resource load status of the at least one DU, the second DU as the DU that assists the first DU in the communication or the candidate DU that is capable of assisting the first DU in the communication.

25. The method according to any one of claims 8 to 23, wherein determining, by the first apparatus, the second DU as the DU that assists the first DU in the communication or the candidate DU that is capable of assisting the first DU in the communication comprises:
receiving, by the first apparatus, third notification information sent by the first DU, wherein the third notification information is for notifying the first apparatus that the second DU is the DU that assists the first DU in the communication or the candidate DU that is capable of assisting the first DU in the communication; and
determining, by the first apparatus based on the third notification information, the second DU as the DU that assists the first DU in the communication or the candidate DU that is capable of assisting the first DU in the communication.

26. A communication apparatus, comprising:
an interface unit, configured to input and/or output information; and
a processing unit, configured to perform the method according to any one of claims 8 to 25 through the interface unit.

27. A communication apparatus, comprising a processor, wherein the processor is coupled to a memory that stores instructions; and when the instructions are executed by the processor, the communication apparatus is enabled to perform the method according to any one of claims 8 to 25.

28. A communication system, comprising a first apparatus, wherein the communication system further comprises at least one of the following: a first central unit CU or at least one distribution unit DU, wherein
the first apparatus is configured to implement the method according to any one of claims 8 to 25.

29. A computer-readable storage medium, wherein the computer-readable storage medium stores a computer program; and when the computer program is run on a computer, the method according to any one of claims 8 to 25 is enabled to be performed.

30. A chip, wherein the chip is coupled to a memory, and the chip reads a computer program stored in the memory, to enable the method according to any one of claims 8 to 25 to be performed.
